# EUROPEAN PATENT APPLICATION

(11) **EP 2 523 460 A1**
(43) Date of publication of application: **14.11.2012**
(21) Application number: 10842140.5
(22) Date of filing: 11.11.2010
(51) Int. Cl.: H04N 13/00, G11B 27/00, H04N 5/91, H04N 7/26

(54) **IMAGE PROCESSING DEVICE, INFORMATION RECORDING MEDIUM, IMAGE PROCESSING MEDIUM, AND PROGRAM**

(30) Priority: 08.01.2010 JP 2010003274
(71) Applicant: Sony Corporation, Tokyo 108-0075 (JP)
(72) Inventor: KATSUMATA, Mitsuru, Tokyo 108-0075 (JP); HIRABAYASHI, Mitsuhiro, Tokyo 108-0075 (JP)
(74) Representative: Ealey, Douglas Ralph
(86) International application number: PCT/JP2010/070104
(87) International publication number: WO 2011/083625

(57) **Abstract**

[Abstract] To provide a configuration where it is possible to confirm three-dimensional image information such as whether or not three-dimensional image data is included in an MP4 file by referencing management information of the MP4 file. There is a configuration where three-dimensional image management information such as three-dimensional image identification information which relates to whether or not three-dimensional image data is included in the MP4 file and three-dimensional image details information which is able to identify a recording method and the like of three-dimensional images is recorded in a profile box or an AV codec box of the MP4 file as management information. Accordingly, a device which acquires the MP4 file and attempts to carry out reproduction is able to confirm whether or not three-dimensional images are included in the image data which is stored in the MP4 file and further the method thereof by referencing the three-dimensional image management information which is recorded in the management information of the MP4 file, is able to determine the possibility of reproduction, and is able to smoothly execute decoding and reproduction processes which are appropriate for each three-dimensional image method.

## Description

### Technical Field

The present invention relates to an image processing device, an information recording medium, an image processing method, and a program. Furthermore, in detail, the present invention relates to an image processing device, an information recording medium, an image processing method, and a program where recording and reproduction of images for three-dimensional image (3D image) display is performed.

### Background Art

In order to generate images which are able to be viewed stereoscopically, so-called three-dimensional images (also referred to as 3D images or stereo images), images taken from different viewpoints, that is, a left-eye image and a right-eye image are necessary. The display of three-dimensional images is possible by using the images taken from different viewpoints.

There are various methods in three-dimensional image (3D image) display methods. For example, there is a display method which corresponds to a passive glasses method where images which are viewed by each of the left and right eyes are separated using a polarization filer, a color filter, or the like, a display method which corresponds to an active glasses method where images which are viewed by a liquid crystal shutter being opened and closed alternately left and right are separated over time alternately for the left and right eyes, or the like. In either of the display methods, the left-eye image and the right-eye image are used.

Image data which are not limited to three-dimensional images (3D images) such as still images or moving images which are taken by a camera is encoded according to various encoding (compression) formats during a recording process with regard to a medium or during data transmission. That is, recording or transmission is performed with the amount of data reduced.

In the encoding formats, for example, there are various standards such as JPEG which specifies a still image encoding format and MPEG which is an encoding format with mainly moving images as a target. For example, in Fig. 10 of the Patent Citation 1 (Japanese Unexamined Patent Application Publication No. 2004-334833), a format example which is used in a process for recording three-dimensional still images is described.

Up until now, the use of high precision images such as HD (High Definition) images is progressing and encoding methods with high compression rates are used. As one method of a storage file format of encoding data, there is MP4 file format (ISO/IEC 14496-14) (referred to below as MP4).
MP4 is a storage file format of compression moving image data of the MPEG (Moving Picture Experts Group) 4 format. MP4 is a standard which is specified in ISO/IEC 14496. MP4 is a format where various formats such as MPEG-2 and MPEG-1 moving images, audio such as AAC and MP3, and still images such as JPEG and PNG, not only the moving image in the MPEG-4 format, are able to be stored.

In this manner, various formats of encoding data is able to be stored in the MP4 file, and in MP4, a region is set where management information is recorded with regard to the format or type of encoding data which is stored in the MP4 file. In a case where decoding process of the encoding data is performed, a confirmation process of the management information in the MP4 file is executed.

However, in the management information specifications of the current MP4 format, there is a problem where a storage region of information for distinguishing whether an image which is stored in the MP4 file is a three-dimensional (3D) image or a two-dimensional (2D) image is not specified.

A device which attempts to read out and to reproduce an MP4 file from a recording medium or a device which receives an MP4 file via a communication means and attempts to carry out reproduction is not able to identify whether a storage image is a three-dimensional (3D) image or a two-dimensional (2D) image from the management information of the MP4 file. Accordingly, it may not be possible to grasp whether it is three-dimensional image data or a two-dimensional image data unless the image is actually obtained and analyzed or reproduced. As a result, for example, a problem occurs where the three-dimensional image data is erroneously displayed in a display device which does not have a three-dimensional image display function.

In addition, there are various methods in terms of the three-dimensional image display methods as described above, many reproduction devices and display devices have a configuration where image reproduction or display corresponding to only one portion of a method is possible. Accordingly, it may be not possible to confirm whether or not it is a three-dimensional image which is able to be reproduced or displayed in the device itself using only the management information according to the current MP4 format.
That is, there is a problem in that, using only the management information according to the current MP4 file, it may not be possible to confirm whether or not it is data which is able to be processed by the device itself without confirming the data configuration by obtaining the image data or actually executing a reproduction or display process.

### Citation List

### Patent Literature

PTL 1: Japanese Unexamined Patent Application Publication No. 2004-334833

### Summary of Invention

### Technical Problem

The present invention, for example, takes into consideration of the problems described above, and a three-dimensional image is included in image data which is stored in an MP4 file or three-dimensional image management information such as a three-dimensional image method is recorded in the management information of a file according to the MP4 format. Due to this configuration, there is an object of providing an image processing device, an information recording medium, an image processing method, and a program where a correct reproduction process is able to be executed by an erroneous reproduction process or display process being prevented due to it being possible to grasp whether storage data is a three-dimensional image or a two-dimensional image before the actual data is obtained from an MP4 file, and furthermore, it being possible for the three-dimensional image method or the like to be confirmed in a reproduction device or a display device. Solution to Problem

A first aspect of the present invention provides an image processing device which has an encoding section which executes an image data encoding process and a file generation section which generates an encoding data storage file which includes encoding data which is generated by the encoding section and management information of the encoding data, where the file generation section performs a generation process of a file where three-dimensional image identification information, which indicates whether or not three-dimensional image data is included in image data which is stored in a file, is recorded in the management information.

Furthermore, in an embodiment of the image processing device of the invention, the file generation section generates a file where three-dimensional image identification information is recorded in the management information so that it is possible to identify any of (a) to (c) where
(a) image data which is stored in the file is only three-dimensional image data,
(b) image data which is stored in the file is only two-dimensional image data, and
(c) image data which is stored in the file is mixed data of three-dimensional image data and two-dimensional image data.

Furthermore, in an embodiment of the image processing device of the invention, the file generation section has a configuration where generation of an MP4 file is executed and generates a file which records the three-dimensional image identification information in a profile box of the MP4 file.

Furthermore, in an embodiment of the image processing device of the invention, the file generation section generates a file which includes three-dimensional image details information, which is able to identify a three-dimensional image method, in the management information in a case where the three-dimensional image data is included in the file storage image data.

Furthermore, in an embodiment of the image processing device of the invention, the file generation section records information which, as the three-dimensional image details information, identifies that the file storage image data is three-dimensional image data according to which of methods of (a) to (c) where
(a) frame sequential method,
(b) side by side method, and
(c) top and bottom method.

Furthermore, in an embodiment of the image processing device of the invention, the file generation section has a configuration where the generation of an MP4 file is executed and generates a file which records the three-dimensional image detail information in an AV codec box of the MP4 file.

Furthermore, in an embodiment of the image processing device of the invention, the file generation section generates a file which sets a scheme information box which records the three-dimensional image details information in a lower level of the AV codec box of the MP4 file.

Furthermore, in an embodiment of the image processing device of the invention, the file generation section generates a file which is recorded so that there is layering of a first scheme information box where three-dimensional image details information is recorded in a lower level of the AV codec box of the MP4 file and a second scheme information box in which data configuration information which corresponds to the image data stored in the MP4 file and is different to the three-dimensional image details information is recorded.

Furthermore, in an embodiment of the image processing device of the invention, the file generation section performs a process where the three-dimensional image details information is recorded in sector data units of a track unit or a sample unit which are sector data of the image data which is stored in the MP4 file.

Furthermore, a second aspect of the present invention provides an image processing device which has a file analysis section which analyses an encoding data storage file which includes encoding data of image data and management information of the encoding data, a decoding section which executes an image data decoding process, and a control section which executes data processing control, where the file analysis section acquires three-dimensional image management information which is recorded in the management information and the control section determines possibility of reproduction in a device itself by using the three-dimensional image management information and performs control where a decoding process of the image data in the decoding section starts after it is determined whether reproduction is possible.

Furthermore, in an embodiment of the image processing device of the invention, the encoding data storage file is an MP4 file and the file analysis section acquires the three-dimensional image management information which is recorded in a profile box of the MP4 file and identifies any of (a) to (c) where
(a) the image data which is stored in the file is only three-dimensional image data,
(b) the image data which is stored in the file is only two-dimensional image data, and
(c) the image data which is stored in the file is mixed data of three-dimensional image data and two-dimensional image data.

Furthermore, in an embodiment of the image processing device of the invention, the encoding data storage file is an MP4 file and the file analysis section acquires the three-dimensional image management information which is recorded in an AV codec box of the MP4 file and performs a recording method identification process with regard to the three-dimensional data which is included in the file storage image data.

Furthermore, in an embodiment of the image processing device of the invention, the file analysis section acquires the three-dimensional image management information which is recorded in the AV codec box of the MP4 file and identifies a method of the three-dimensional image data which is included in the file storage image data.

Furthermore, in an embodiment of the image processing device of the invention, the file analysis section acquires the three-dimensional image management information which is recorded in the AV codec box of the MP4 file and identifies that the three-dimensional image data which is included in the file storage image data is three-dimensional image data according to which of methods (a) to (c) where
(a) frame sequential method,
(b) side by side method, and
(c) top and bottom method.

Furthermore, a third aspect of the present invention provides an information recording medium in which an MP4 which includes encoding data of image data and management information of the encoding data is recorded, where the management information includes three-dimensional image management information which indicates whether or not three-dimensional image data is included in the image data and possibility of reproduction in a device itself is determinable by referencing the three-dimensional image management information in the device which reads out and reproduces the MP4 file.

Furthermore, a fourth aspect of the present invention provides an image processing method which is executed in an image processing device where an encoding process step of executing of an image data encoding process by an encoding section and a file generating step of generating an encoding data storage file which includes encoding data which is generated by the encoding section and management information of the encoding data by a file generation section are included, and the file generating step performs a process of generating files where three-dimensional image identification information which indicates whether or not three-dimensional image data is included in the image data stored in the file is recorded in the management information.

Furthermore, a fifth aspect of the present invention provides an image processing method which is executed in an image processing device where a file analyzing step of analyzing an encoding data storage file which includes encoding data of image data and management information of the encoding data and acquiring of three-dimensional image management information which is recorded in the management information using a file analysis section, and a control step of determining possibility of reproduction in a device itself by applying the three-dimensional image management information and controlling a start of a decoding process of the image data in a decoding section after it is determined that reproduction is possible using a control section are included.

Furthermore, a sixth aspect of the present invention provides a program which executes image processing in an image processing device where an encoding process step of executing of an image data encoding process by an encoding section and a file generating step of generating an encoding data storage file which includes encoding data which is generated by the encoding section and management information of the encoding data by a file generation section are included, and the file generating step performs a process of generating files where three-dimensional image identification information which shows whether or not three-dimensional image data is included in the image data stored in the file is recorded in the management information.

Furthermore, a seventh aspect of the present invention provides a program which executes image processing in an image processing device where a file analyzing step of analyzing an encoding data storage file which includes encoding data of image data and management information of the encoding data and acquiring of three-dimensional image management information which is recorded in the management information by a file analysis section, and a control step of determining of the possibility of reproduction in a device itself by applying the three-dimensional image management information and controlling a start of a decoding process of the image data in a decoding section after it is determined that reproduction is possible by the control section are included.

Here, the program of the present invention is, for example, a program which is able to be provided using a recording medium or a communication medium provided using a computer readable format with regard to an information processing device or a computer system which are able to execute various program codes. By providing a program such as this in a computer readable format, processing according to the program is realized in an information processing device or a computer system.

Further other aims, characteristics, and advantages of the present invention will be made clear by a detailed description based on the embodiments of the present invention and the attached diagrams which will be described later. Here, a system in the specifications is a logical collective configuration of a plurality of devices and is not limited to each of the devices of the configuration being in the same housing.

### Advantageous Effects of Invention

According to the configuration of the embodiments of the present invention, there is a configuration where three-dimensional image management information, such as three-dimensional image identification information which is related to whether or not three-dimensional image data is included in an MP4 file or three-dimensional image details information which is able to distinguish the recording method of three-dimensional images and the like, is recorded in a profile box or an AV codec box as management information of the MP4 file. Accordingly, a device which attempts to acquire and reproduce the MP4 file is able to confirm whether or not three-dimensional images are included in the image data which is stored in the MP4 file and the method thereof by referencing the three-dimensional image management information which is recorded in the management information of the MP4 file, is able to determine the possibility of reproduction, and is able to smoothly execute a decoding and reproduction process which is appropriate for each three-dimensional image method.

### Brief Description of Drawings

[Fig. 1] Fig. 1 is a diagram illustrating a basic configuration of an MP4 file format.
[Fig. 2] Fig. 2 is a diagram illustrating an example where three-dimensional image identification information is recorded in a profile box (uuid (PROF)) of an MP4 file.
[Fig. 3] Fig. 3 is a diagram illustrating a specific example of setting a flag in three-dimensional image identification information which is recorded in a profile box (uuid (PROF)) of an MP4 file.
[Fig. 4] Fig. 4 is a diagram illustrating an example where three-dimensional image identification information is recorded in an AV codec box (avc1) of an MP4 file.
[Fig. 5] Fig. 5 is a diagram illustrating a data restoration process and a reproduction process method according to a frame sequential [FS: Frame Sequential] method.
[Fig. 6] Fig. 6 is a diagram illustrating a data restoration process and a reproduction process method according to a side by side [SbS: Side By Side] method.
[Fig. 7] Fig. 7 is a diagram illustrating a data restoration process and a reproduction process method according to a top and bottom [T&B: Top & Bottom] method.
[Fig. 8] Fig. 8 is a diagram illustrating an example of setting data of frame configuration information as three-dimensional image details information which is recorded in a stereo video information box which is set in an AV codec box.
[Fig. 9] Fig. 9 is a diagram illustrating an example of setting data of frame configuration information as three-dimensional image details information which is recorded in a stereo video information box which is set in an AV codec box.
[Fig. 10] Fig. 10 is a diagram illustrating an example where three-dimensional image identification information is recorded using a scheme information box (sinf) which is specified as an extended configuration of an AV codec box of an MP4 file.
[Fig. 11] Fig. 11 is a diagram illustrating an example where three-dimensional image identification information is recorded using a scheme information box (sinf) which is specified as an extended configuration of an AV codec box of an MP4 file.
[Fig. 12] Fig. 12 is a diagram illustrating a flowchart which describes a recording process sequence of image data which is executed by the image processing device of the present invention.
[Fig. 13] Fig. 13 is a diagram illustrating a flowchart which describes a reproduction process sequence of image data which is executed by the image processing device of the present invention.
[Fig. 14] Fig. 14 is a diagram illustrating a configuration example in the image processing device of the present invention.

### Description of Embodiments

Below, an image processing device, an information recording medium, an image processing method, and a program of the present invention will be described wile referencing the attached diagrams. The description is performed in the item order below.
1. Basic Configuration of MP4 File Format
2. Configuration where Three-dimensional Image Management Information is Recorded in Management Information of MP4 File
2A. (1) Example where Three-dimensional Image Identification Information is Recorded in Profile Box (uuid (PROF)) (Example 1)
2B. (2) Example where Three-dimensional Image Details Information is Recorded in AV Codec Box (avc1) (Example 2)
2C. (3) Example where Three-dimensional Image Details Information is Recorded using Scheme Information Box (sinf) Specified as Extended Configuration of AV Codec Box (avc1) (Example 3)
3. Image Processing Sequence Executed by Image Processing Device
4. Configuration Example of Image Processing Device of Present Invention

### [1. Basic Configuration of MP4 File Format]

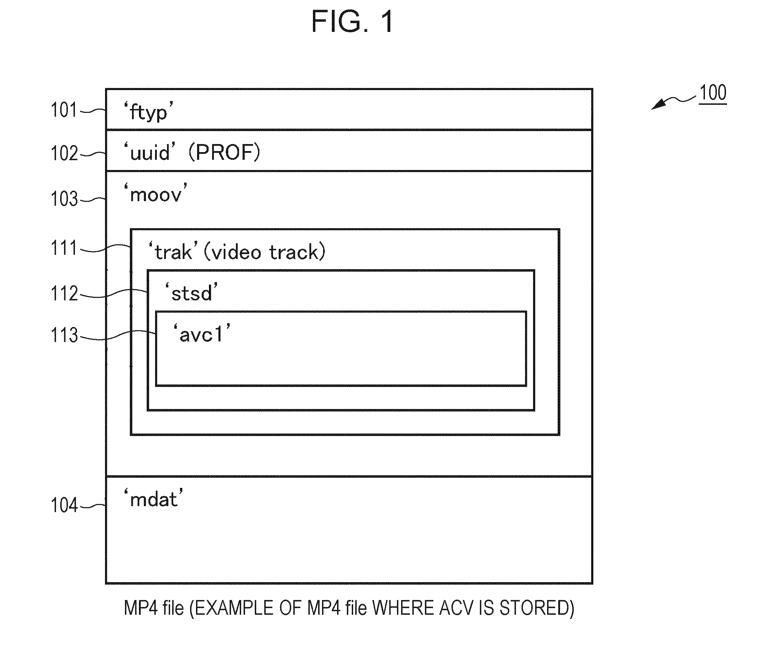

First, a basic configuration of the current MP4 file format will be described with reference to Fig. 1. As described above, MP4 is a storage file format of encoding data of the MPEG (Moving Picture Experts Group) 4 format and is specified in ISO/IEC 14496. MP4 has a function where various formats of image and audio data and not only the moving image in the MPEG-4 format are able to be stored such as MPEG-2 and MPEG-1 moving images, audio such as AAC and MP3, and still images such as JPEG and PNG.

The MP4 file format which is specified in ISO/IEC 14496 has an object orientation data configuration. Each object is referred to as a box. Fig. 1 is a diagram illustrating a configuration example of a MP4 file 100 where AV (Audio Video) data which is typically formed from image and audio data is stored. The MP4 file 100 has a box for each of the below as shown in Fig. 1. There are the boxes of
(1) a file type box (ftyp) 101,
(2) a profile box (uuid (PROF)) 102
(3) a movie box (moov) 103, and
(4) an actual data box (mdat) 104.

(1) The file type box (ftyp) 101 includes recording information of a file type.
(2) The profile box (uuid (PROF)) 102 records, for example, file information such as a frame rate.
(3) The movie box (moov) 103 records management information (meta data) of storage data.
(4) The actual data box (mdat) 104 records actual data such as image and audio data which have been encoded (compressed).

The image data and the audio data which are actual reproduction targets are stored in (4) the actual data box (mdat) 104. The respective boxes of piece of information in (1) to (3), that is, (1) the file type box (ftyp) 101, (2) the profile box (uuid (PROF)) 102, and (3) the movie box (moov) 103 store management information such as search information or classification information of the actual data. Here, information for applying a decoding process (extending process) of the actual data, which is stored in the actual data box (mdat) 104, and the like are included in the classification information. In addition, in a case where the actual data is encoded, information for applying to a decoding process thereof and the like are also included.

Here, in the movie box (moov) 103, management data (meta data) is recorded in track units which are data sections of the actual data which is stored in the actual data box (mdat) 104.
A track is, for example, a video track which corresponds to image data, an audio track which corresponds to audio data, and the like. Here, it is also possible to set a first audio track which corresponds to the Japanese language, a second audio track which corresponds to the English language, and the like. In addition, it is possible to sets tracks which are segmented such as a first video track and a second video track which correspond to different images.

Here, in the movie box (moov) 103 shown in Fig. 1, only one track box 111, where meta data which corresponds to one track (trak (video track)) is stored, is shown, but this shows a representative example of a track box. In practice, boxes with the same format as the track box 111 shown in Fig. 1 are stored in the movie box (moov) 103 according to the number of tracks.

Meta data, which corresponds to data in track units which is set as a section region of the actual data, is recorded in the track box 111.
A sample description box (stsd) 112 and a AV codec box (avc1) 113 in a lower level thereof are stored in the track box 111.

A region where a track is further segmented is a sample and one track is set with one or more samples.
That is, the actual data is configured using one or more tracks and one track is further configured using one or more samples.

In Fig. 1, one sample description box (stsd) 112 is shown in the track box 111. One sample description box (stsd) is necessarily present in the track box.

A lower level box of the sample description box (stsd) 112 is the AV codec box (avc1) 113, and codec details information of the actual data which corresponds to the sample, that is, details information (codec information), which is necessary for a decoding and reproduction process of the sample which is an element of the actual data, is recorded in the AV codec box (avc1) 113. Here, it is possible to record not only information which relates to the decoding process of the MP4 but also information which relates to, for example, an encoding format in the AV codec box (avc1) 113.

A device which reads out and reproduces an MP4 file from a medium such as a DVD or a device which receives an MP4 file via a communication means and carries out reproduction reads the management information of the MP4 file which has the configuration shown in Fig. 1, that is, the management information which is stored in at least either of the file type box (ftyp) 101, the profile box (uuid(PROF)), and the movie box (moov) 103 and confirms the details of the actual data which is stored in the actual data box (mdat) 104. The decoding process is executed according to the information by the detailed codec information being acquired in track or sample units using a management information confirmation process. It is possible to perform the decoding and reproduction processes of the MP4 data using a process such as this.

However, as described above, a region which stores information for distinguishing whether an image which is stored in the MP4 file is a three-dimensional (3D) image or a two-dimensional (2D) image is not specified in the management information of the current MP4 file format.

Accordingly, the device which attempts to read out and to reproduce an MP4 file from a recording medium or the device which receives an MP4 file via a communication means and attempts to carry out reproduction is not able to grasp whether storage data of the MP4 file is a three-dimensional image or a two-dimensional image unless the image is actually obtained and analyzed or reproduced. As a result, for example, a phenomena occurs where the three-dimensional image data is erroneously displayed in a display device which does not have a three-dimensional image display function. In addition, as described above, it may not be possible to confirm whether or not it is a three-dimensional image which is able to be reproduced or displayed in the device itself using only the management information.

In a case where the current MP4 format is used in this manner, there is a problem in that it may not be possible to confirm whether or not it is data which is able to be processes by the device itself unless the data configuration is configured by the image data being actually obtained from the actual data box (mdat) 104 or the reproduction or display processes being actually executed in the case where the image which is stored in the MP4 file is a three-dimensional image.

### [2. Configuration where Three-dimensional Image Management Information is Recorded in Management Information of MP4 File]

Below, a plurality of examples, where management information with regard to three-dimensional images is recorded in the management information of the MP4 file, will be described below as configurations which solve the problem described above.
Three examples below will be sequentially described.
(1) Example where Three-dimensional Image Identification Information is Recorded in Profile Box (uuid(PROF) ) (Example 1)
(2) Example where Three-dimensional Image Details Information is Recorded in AV Codec Box (avc1) (Example 2)
(3) Example where Three-dimensional Image Details Information is Recorded in Scheme Information Box (sinf) Specified as Extended Configuration of AV Codec Box (avc1) (Example 3)
   Here, each of the examples is able to be executed even as an independent configuration, but a configuration where a plurality of the examples are used by being combined is also possible.

### [2A. (1) Example where Three-dimensional Image Identification Information is Recorded in Profile Box (uuid(PROF)) (Example 1)]

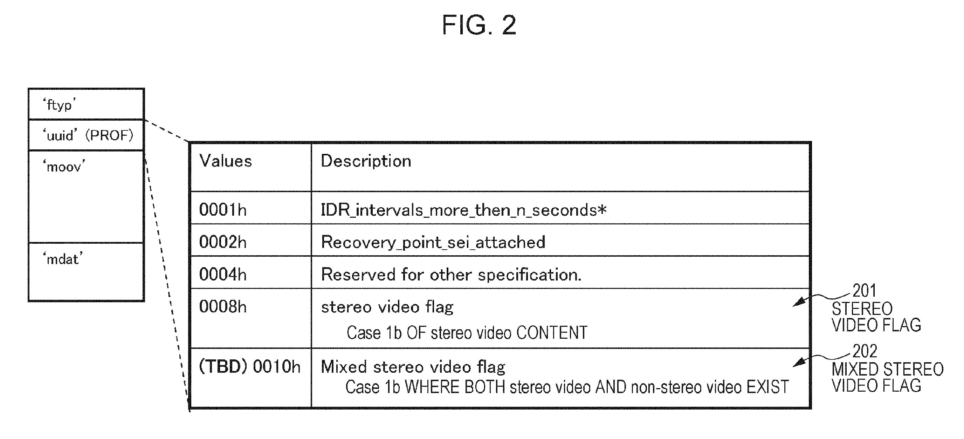

First, an example where three-dimensional image identification information is recorded in a profile box (uuid(PROF)) will be described with reference to Fig. 2.

Fig. 2 is a diagram illustrating a configuration of upper-level 16 bits (0001h to 0010h) of a video management flag (video_attribute_flag) which is included in the profile box (uuid(PROF)) which is proposed in the present example. Here, (h) has the meaning of a designator which is a hexadecimal number.

Out of the upper-level 16 bits of the video management flag (video_attribute_flag) shown in Fig. 2, the first half (0001h to 0004h) of the data is a field which is already specified in the existing MP4, and for example, is specified as a data region below.
There is information which is applied to the decoding of the MP4 of
0001h: IDR (Instantaneous Decoder Refresh) frame interval information, and
0002h: information on the presence or absence of a recovery point SEI message.
From 0004h onward is a reserve region.

In the present example, information, on whether or not image data which is stored the actual data box (mdat) of the MP4 file (refer to Fig. 1) includes three-dimensional images is included, is stored in the latter half of the upper-level 16 bit (0001h to 0010h) of the video management flag (video_attribute_flag).

Specifically, the three-dimensional image identification information below is stored as shown in Fig. 2.
0008h: stereo video flag 201, and
0010h: mixed stereo video flag 202,
where each of the flags is set as the three-dimensional image identification information.

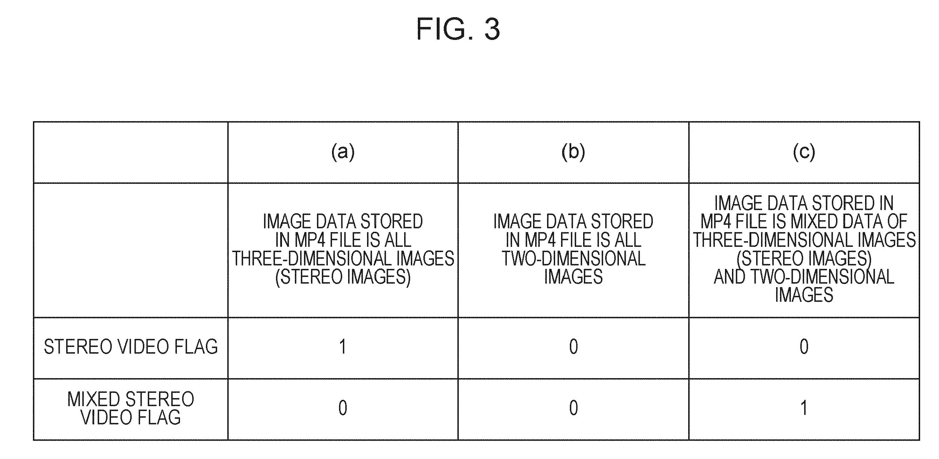

Specific content of the values of each flag will be described with reference to Fig. 3.
As a format of the image data which is stored in the MP4 file, there are three patterns as shown in Fig. 3.
There are the three patterns of
(a) the image data which is stored in the MP4 file being all three-dimensional image data (stereo images),
(b) the image data which is stored in the MP4 file being all two-dimensional image data, and
(c) the image data which is stored in the MP4 file being mixed data of three-dimensional image data (stereo images) and two-dimensional image data.

The stereo video flag 201 is set so that a bit value is equal to one in a case where three-dimensional images are included in all of the image data which is stored in the MP4 file is and a bit value is equal to zero when not included.
Accordingly, the bit value is equal to one only in the case of (a) where
(a) the image data which is stored in the MP4 file is all three-dimensional image data (stereo images)
   as shown in Fig. 3.
   In addition, the bit value is equal to zero in the cases of (b) and (c) where
(b) the image data which is stored in the MP4 file is all two-dimensional image data, and
(c) the image data which is stored in the MP4 file is mixed data of three-dimensional images (stereo images) and two-dimensional images.

On the other hand, the mixed stereo video flag 202 is set so that a bit value is equal to one in a case where the image data which is stored in the MP4 file is mixed data of three-dimensional images and two-dimensional images and a bit value is otherwise equal to zero.
Accordingly, the bit value is equal to one only in the case of (c) where
(c) the image data which is stored in the MP4 file is mixed data of three-dimensional images (stereo images) and two-dimensional images
as shown in Fig. 3.
In addition, the bit value is equal to zero in the cases of (a) and (b) where
(a) the image data which is stored in the MP4 file is all three-dimensional image data (stereo images), and
(b) the image data which is stored in the MP4 file is all two-dimensional image data.

Due to the setting of the flag, the identification of the data below is possible.

### (Case 1)

In the case where the stereo video flag is equal to one and the mixed stereo video flag is equal to zero, it is determined that
(a) the image data which is stored in the MP4 file is all three-dimensional image data (stereo images).

### (Case 2)

In the case where the stereo video flag is equal to zero and the mixed stereo video flag is equal to zero, it is determined that
(b) the image data which is stored in the MP4 file is all two-dimensional image data.

### (Case 3)

In the case where the stereo video flag is equal to zero and the mixed stereo video flag is equal to one, it is determined that
(c) the image data which is stored in the MP4 file is mixed data of three-dimensional images (stereo images) and two-dimensional images.

In this manner, due to the configuration of the present example, it is possible to acquire three-dimensional image information of the image data which is stored in the MP4 file by only confirming the settings of the flags of the stereo video flag 201 and the mixed stereo video flag 202 which are provided in the video management flag (video_attribute_flag) in the profile box (uuid(PROF)) of the MP4 file. Specifically, it is possible to confirm that the image data stored in the MP4 file is which of any of the types below. It is possible to distinguish each of the types of
(type a) configured from only three-dimensional images,
(type b) configured from only two-dimensional images, and
(type c) mixed data of three-dimensional images and two-dimensional images.

Here, the set values for the bit values shown in Fig. 3 are one example, the reverse bit values may be set, and various settings are possible where the bit values are set so that the identification of each type described above is possible.

The device which attempts to read out and to reproduce an MP4 file from a recording medium or the device which receives an MP4 file via a communication means and attempts to carry out reproduction is able to acquire the three-dimensional image information of the storage data of the MP4 file by confirming the settings of the flags of the stereo video flag 201 and the mixed stereo video flag 202 which are set in the profile box (uuid(PROF)) before the images are actually obtained from the actual data box (mdat) of the MP4 file. Accordingly, for example, it is possible to prevent the phenomena where three-dimensional image data is erroneously displayed in a display device which does not have a three-dimensional image display function.

### [2B. (2) Example where Three-dimensional Image Details Information is Recorded in AV Codec Box (avc1) (Example 2)]

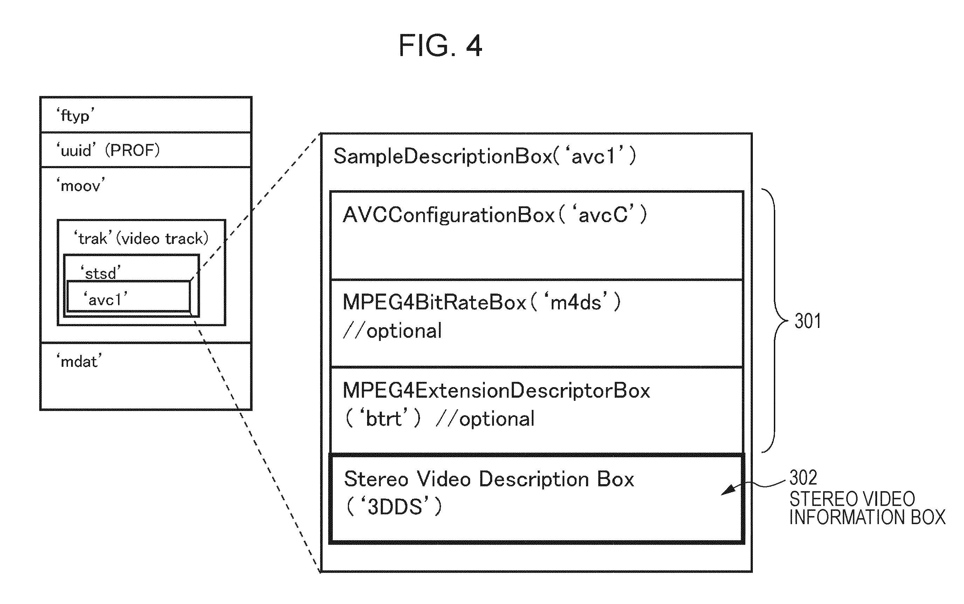

Next, an example where three-dimensional image details information is recorded in an AV codec box (avc1) will be described with reference to Fig. 4.

Here, as described previously with reference to Fig. 1, the AV codec box (avc1) is a box which is set at a lower level that the sample description box (stsd) which is further at a lower level than the track box 111 which is a lower level of a movie box (moov).
The AV codec box (avc1) is a box where codec information and the like of a sample, which is a data section into which the actual data stored in the actual data box (mdat) is segmented, is recorded as described above.

Here, the codec information of all of the samples which are included in the track in this case is set to the AV codec box (avc1). It is possible to set one or a plurality of the AV codec boxes (avc1) to the lower level of the sample description box (stsd). However, in the case where the content is the same, a plurality of settings is not necessary. That is, it is not necessary that the number of samples and AV codec boxes match and it is possible to set the AV codec boxes to be one even if the number of samples is a plurality.

In the example 2, the three-dimensional image details information is recorded in the AV codec box (avc1). A data configuration example of the AV codec box (avc1) according to the present example is shown in Fig. 4.

Information of a data region 301 shown in Fig. 4 is a codec information storage region which is already specified in the existing MP4 file format. Each information box below is set in the data region 301.
Information which is necessary for a MP4 encoding data decoding process, that is, codec information is recorded in the boxes of
AVC Configuration Box,
MPEG4 Bit Rate Box, and
MPEG4 Extension Descriptor Box.
The codec information is used in common for two-dimensional images and three-dimensional images.

In the present example, in addition to the existing codec information boxes, a
Stereo Video Information Box (Stereo Video Description Box) 302
is added as shown in Fig. 4.
In the stereo video information box 302, information on whether or not three-dimensional images are included in the image data which is stored in the actual data box (mdat) of the MP4 file (refer to Fig. 1) and details information in relation to three-dimensional image data in the case where three-dimensional images are included are recorded. In the details information, for example, display method information of the three-dimensional images and the like are included.

As described above, there are various methods in terms of three-dimensional images (3D images). For example, there is a method which corresponds to a passive glasses method where images which are viewed by each of the left and right eyes are separated using a polarization filer, a color filter, or the like, a method which corresponds to an active glasses method where images which are viewed by a liquid crystal shutter being opened and closed alternately left and right are separated over time alternately for the left and right eyes, or the like. For example, according to each of the display methods, the recording methods of the recording data which is stored in the MP4 file is also different.
In the stereo video information box 302, the image data which is stored in the actual data box (mdat) of the MP4 file (refer to Fig. 1) also includes information with regard to the recording data which corresponds to either method.

Here, as the recording method of the three-dimensional image data, for example, there is
a frame sequential (Frame Sequential) method,
a side by side (Side by Side) method, and
a top and bottom (Top & Bottom) method.

The frame sequential (Frame Sequential) method is a method where frames of a left-eye image (L image) and a right-eye image (R image) are recorded alternately as L, R, L, R, ....
The side by side (Side by Side) method is a method where the LR images are recorded by being divided into left and right in one frame image.
The top and bottom (Top & Bottom) method is a method which the LR images are recorded by being divided into top and bottom in one frame image.
The three-dimensional image details information such as the image recording method which is used in the reproduction and display process of three-dimensional images is recorded in the stereo video information box 302.

The device which acquires an MP4 file via a recording medium, a communication medium, or the like and attempts to carry out reproduction is able to acquire the details information which is applied to the reproduction and display process of three-dimensional images such as data on which of the recording methods and display methods corresponds to the three-dimensional image data of the storage data of the MP4 file by acquiring the three-dimensional image information of the stereo video information box 302 which is set in the AV codec box (avc1) before actually acquiring the images from the actual data box (mdat) of the MP4 file.

Accordingly, for example, it is possible to prevent the phenomena where three-dimensional image data is erroneously displayed in a display device which does not have a three-dimensional image display function. In addition, since it is possible to confirm whether or not it is three-dimensional images which the device itself is able to reproduce or display, it is possible to start the decoding and reproduction process by taking out the storage data of the MP4 file after having performed confirmation of whether it is data which the device itself is able to process and it is possible to delete the execution of unnecessary processes.

Various settings are possible as the recording format of the three-dimensional image details information with regard to the AV codec box (avc1), but below, one example will be described.
In ISO/IEC 14496 which specifies advanced video coding (MPEG4-AVC), frame configuration information (Frame Packing Arrangement SEI) for configuring each image frame for reproduction is already specified as normal codec information.

Below, one example of the recording format of the three-dimensional image details information which is described is an example where substantially the same format as the existing frame configuration information (Frame Packing Arrangement SEI) is used.

A specific data setting example of the frame configuration information (Frame Packing Arrangement SEI) which is an example of the three-dimensional image details information which is recorded in the stereo video information box 302 will be described below. Here, in the example below, the three-dimensional image recording methods below,
(a) the frame sequential method [FS]
(b) the side by side method [SbS]
(c) the top and bottom method [T&B]
that is, an example of the setting of the frame configuration information which corresponds to the recording method of different three-dimensional images, will be described.

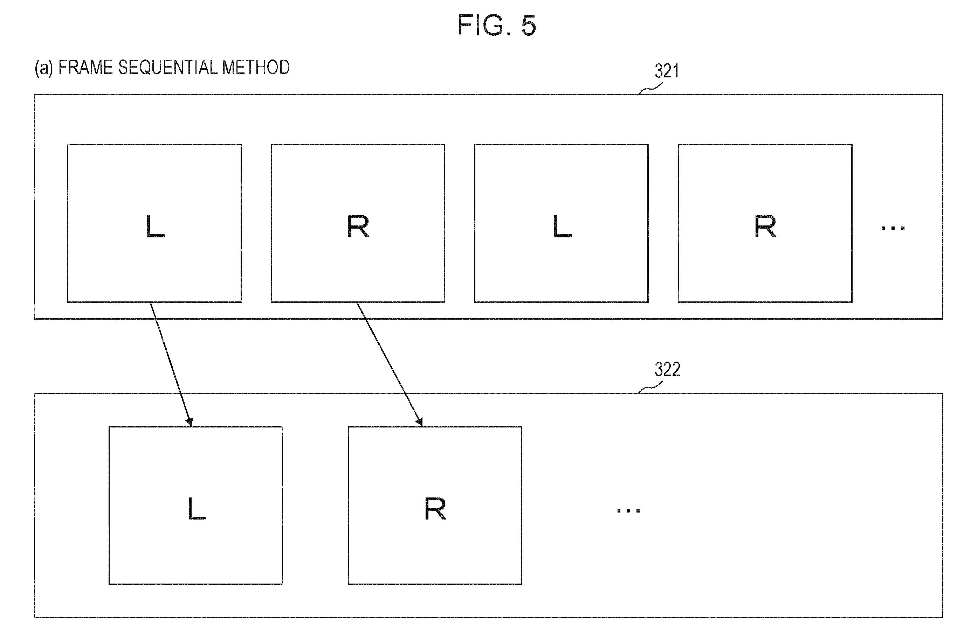

Before the description of the example of the setting of the three-dimensional image information, first, a data restoration process and a reproduction process method of three-dimensional images will be described below with reference to Figs. 5 to 7.
(a) the frame sequential method [FS]
(b) the side by side method [SbS]
(c) the top and bottom method [T&B]

Fig. 5 is a diagram describing a data restoration process and a reproduction process method according to (a) the frame sequential [FS: Frame Sequential] method.
In Fig. 5, a decode image frame 321 and a display image frame 322 which are obtained as the decoding result of the MP4 are shown.
In the frame sequential method, the left-eye image (L image) and the right-eye image (R image) are recorded alternately as LRLRLR.... Accordingly, the image which is obtained from the MP4 decoding result is used as the L image and the R image which are used as the display image frames 322.

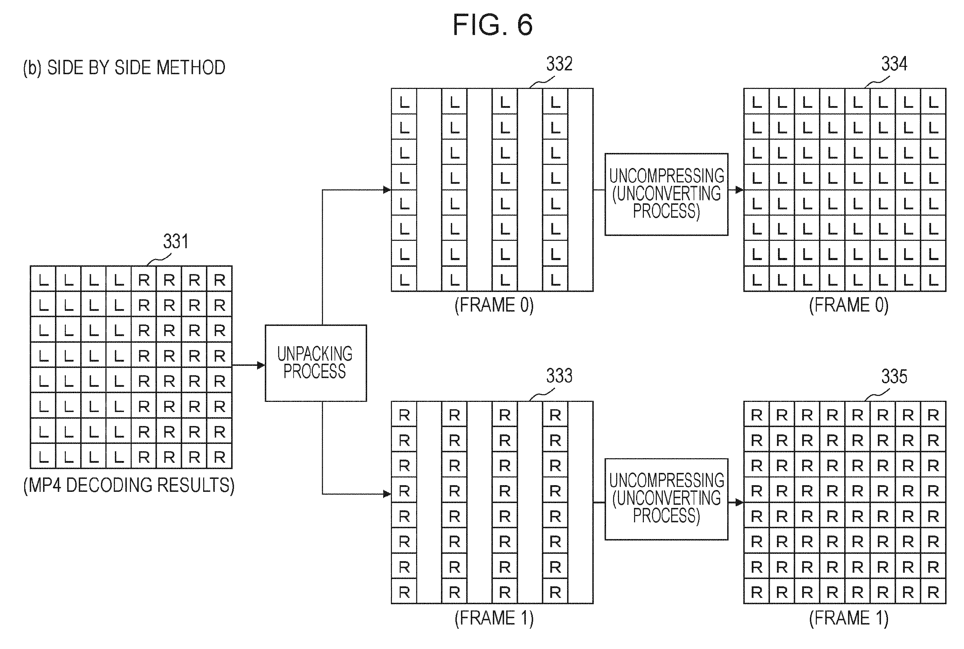

Fig. 6 is a diagram describing a data restoration process and a reproduction process method according to (b) the side by side [SbS: Side by Side] method.
In Fig. 6, the image data of
an MP4 decoding result image 331,
an unpack L image (frame 0) 332,
an unpack R image (frame 1) 333,
a display L image (frame 0) 334, and
a display R image (frame 1) 335
are shown.

In the side by side [SbS: Side by Side] method, the left-eye image (L image) and the right-eye image (R image) are stored in a region where one image frame is divided into left and right as shown in the MP4 decoding result image 331.
From this image, first, the unpack L image (frame 0) 332 and the unpack R image (frame 1) 333 are generated by executing an unpacking process. Furthermore, the display L image (frame 0) 334 and the display R image (frame 1) 335 are generated by an extending process (up-converting).
In this manner, the frame 0 and the frame 1 are set as one unit of an image frame.

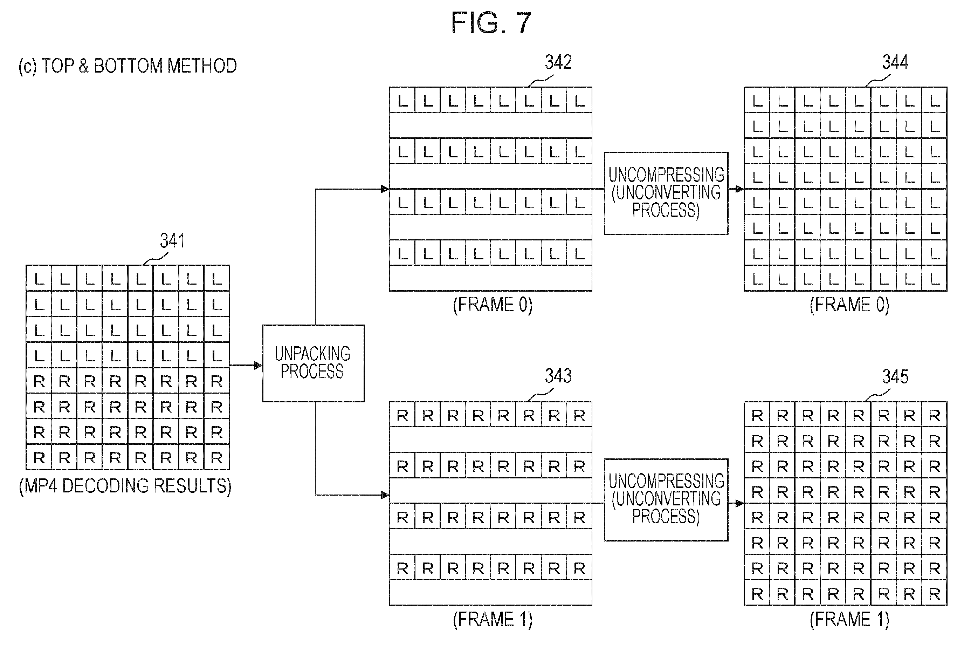

Fig. 7 is a diagram describing a data restoration process and reproduction process method according to (c) the top and bottom [T&B: Top & Bottom] method.
In Fig. 7, the image data of
an MP4 decoding result image 341,
an unpack L image (frame 0) 342,
an unpack R image (frame 1) 343,
a display L image (frame 0) 344, and
a display R image (frame 1) 345
are shown.

In the top and bottom [T&B: Top & Bottom] method, the left-eye image (L image) and the right-eye image (R image) are stored in a region where one image frame is divided into top and bottom as shown in the MP4 decoding result image 341.
From this image, first, the unpack L image (frame 0) 342 and the unpack R image (frame 1) 343 are generated by executing an unpacking process. Furthermore, the display L image (frame 0) 344 and the display R image (frame 1) 345 are generated by an extending process (up-converting).
Also in the top and bottom method, the frame 0 and the frame 1 are set as one unit of an image frame.

In this manner, it is necessary to perform a process according to the method of the three-dimensional images in the device which executes the reproduction and the display of the three-dimensional images. In the configuration of the present example, the details information for identifying that the images which are stored in the MP4 file are three-dimensional images according to which method is recorded as the frame configuration information (Frame Packing Arrangement SEI) in the stereo video information box 302.

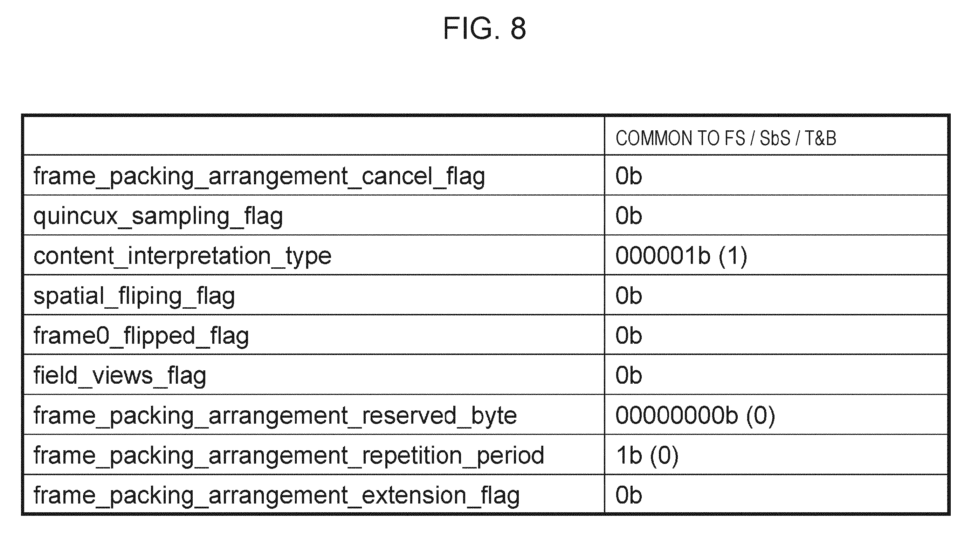

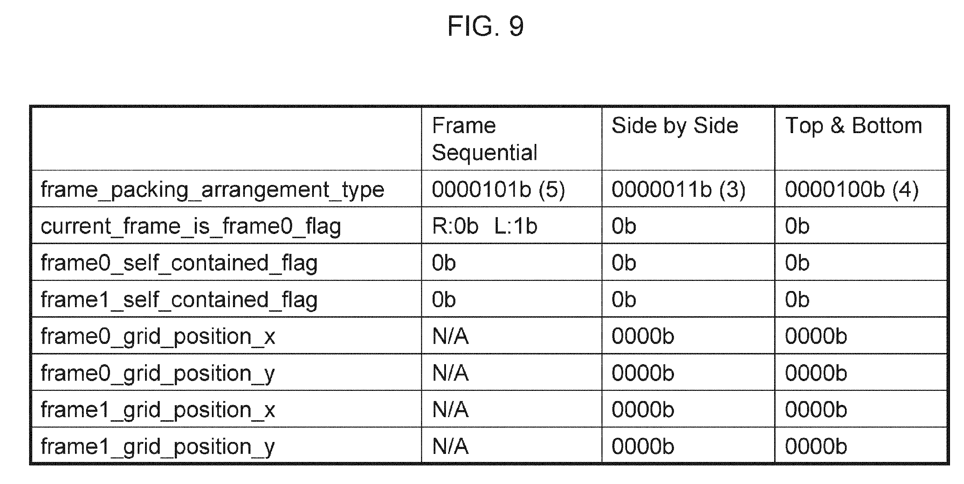

With reference to Figs. 8 and 9, an example will be described of setting the data of the frame configuration information as three-dimensional image details information which is recorded in the stereo video information box 302 which is set in an AV codec box.
Figs. 8 and 9 are diagrams illustrating an example of setting the data in cases where the three-dimensional images which are stored in the MP4 file correspond to the three types below.
It is an example of setting of data of the frame configuration information (Frame Packing Arrangement SEI) which corresponds to each of the methods of
(a) the frame sequential method [FS],
(b) the side by side method [SbS], and
(c) the top and bottom method [T&B].

Below, each of the data of the frame configuration information will be described as the three-dimensional image details information shown in Fig. 8.
In a case where a flag of
a frame packing arrangement cancel flag (frame_packing_arrangement_cancel_flag)
is equal to one, it indicates that the frame configuration information is not used.
In a case of the frame configuration information as the three-dimensional image information which is recorded in the stereo video information box 302, zero is set to indicate the use of the frame configuration information in either method of the frame sequential method [FS], the side by side method [SbS], or the top and bottom method [T&B]. Here, (b) of [0b] has the meaning of a designator which is a binary number.

In a case where a flag of
a quincunx sampling flag (quincunx_sampling_flag) is equal to one, it indicates that the sampling points of the image frame are set to be five points in 3x3 pixels.
The flag is used mainly as information which indicates the sampling position in the decoding process.
In a case of the frame configuration information as the three-dimensional image information which is recorded in the stereo video information box 302, the flag is set to zero in either method of the frame sequential method [FS], the side by side method [SbS], or the top and bottom method [T&B].

A content interpretation type
(content_interpretation_type)
takes each value of, for example, zero to two as a field value, and the content interpretation type is recorded with
a set value of zero in a case where there is no frame mutual relationship,
a set value of one in a case of frame configuration information for three-dimensional (stereo) images where the frame 0 is the left-eye frame and the frame 1 is the right-eye frame, or
a set value of two in a case of frame configuration information for three-dimensional (stereo) images where the frame 0 is the right-eye frame and the frame 1 is the left-eye frame.
In a case of the frame configuration information as the three-dimensional image information which is recorded in the stereo video information box 302, the flag is set to one in either method of the frame sequential method [FS], the side by side method [SbS], or the top and bottom method [T&B].

The flags of
a spatial flipping flag (spatial_fliping_flag), and
a spatial flip flag (frame0_flipped_flag)
store information on whether or not the frame is configured by being continuous in a configuration direction of the image frame, for example, the horizontal direction or the vertical direction.
The setting of the flags is used in order to determine the format of the up-converting (extending process) of the two-dimensional images.
In a case of the frame configuration information as the three-dimensional image information which is recorded in the stereo video information box 302, the flags are not used and the flags is set to zero.

A field view flag (field_view_flag)
records information with regard to the format of a frame interleaving process.
In a case of the frame configuration information as the three-dimensional image information which is recorded in the stereo video information box 302, the flag is not used and the flag is set to zero.

The fields of
a frame packing arrangement reserved byte (frame_packing_arrangement_reserved_byte),
a frame packing arrangement repetition byte (frame_packing_arrangement_repetition_period), and
a frame packing arrangement extension byte (frame_packing_arrangement_extension_flag)
are recording fields of a reserve, repetitive data, and extension data.
In a case of the frame configuration information as the three-dimensional image information which is recorded in the stereo video information box 302, the flag are not used and the flags are set to zero.

Fig. 9 is also a diagram illustrating the example of setting of data of the frame configuration (Frame Packing Arrangement SEI) information which corresponds to each of the methods of the three three-dimensional image recording type below which are
(a) the frame sequential method [FS],
(b) the side by side method [SbS], and
(c) the top and bottom method [T&B].

A value which is different depending on the type of the three-dimensional images is set in a field of
a frame configuration type (frame packing arrangement type).
For example, a reproduction device is able to identify that the three-dimensional images which are stored in a track are three-dimensional image data of which method based on the set values of the fields of
(a) frame sequential method [FS] = 000101b(5)
(b) side by side method [SbS] = 0000011b(3)
(c) the top and bottom method [T&B] = 0000100b(4).
That is, it is possible to identify that the three-dimensional image which is stored in the track is three-dimensional image data of which method of the frame sequential method [FS], the side by side method [SbS], or the top and bottom method [T&B].

Information on whether or not the current frame which is acquired as a result of the MP4 decoding is a frame which corresponds to the frame 0 is recorded in a field of
a current flag is frame 0 flag (current_frame_is_frame0_flag).
In the case of [(a) the frame sequential method [FS]] where the three-dimensional images are recorded by the repetition of the frames of the L image, the R image, the L image, the R image, it is necessary to identify whether it is a left-eye image (L image) or a right-eye image (R image) in frame units which are acquired as a result of decoding.
Accordingly, in the case of (a) the frame sequential method [FS], for example, the values of
right-eye image (R image) = 0, and
left-eye image (L image) = 1
are set in the field.

In the other methods, each of (b) the side by side method [SbS] and (c) the top and bottom method [T&B], the value in the field is set to zero since an identification process with regard to the MP4 decoding result is not necessary as both of the left-eye image (L image = frame 0) and the right-eye image (R image = frame 1) are generated based on the frame which is acquired as the result of the MP4 decoding as described with reference to Figs. 6 and 7.

In a case where mutual frames are to be referenced between frames where frames 0 and 1 are set, the value of the flags of
frame 0 self contained flag (frame0_self_contained_flag), and
frame 1 self contained flag (frame1_self_contained_flag)
are set to one.
In a case of the frame configuration information as the three-dimensional image information which is recorded in the stereo video information box 302, this information is not necessary in either method of the frame sequential method [FS], the side by side method [SbS], or the top and bottom method [T&B] and the value of the flag is set to zero.

There are data fields of
frame 0 grid position X (frame0_grid_position_x),
frame 0 grid position Y (frame0_grid_position_y),
frame 1 grid position X (frame1_grid_position_x), and
frame 1 grid position Y (frame1_grid_position_y)
for indicating the pixel position which is referenced during an image frame configuration process.

In a case of the frame configuration information as the three-dimensional image information which is recorded in the stereo video information box 302, it is N/A (an invalid number) in the frame sequential method [FS], and the value of the flag is set to zero in the side by side method [SbS] and the top and bottom method [T&B].
For example, all of the flag values are set to zero in the side by side method [SbS] and the top and bottom method [T&B] as described with reference to Figs. 6 and 7. This indicates that the reference position is set in a coordinate position at the left upper edge which is specified by (X, Y) = (0, 0) for both frames 0 and 1.

The set values of the frame configuration information (Frame Packing Arrangement SEI) which correspond to each of the methods of
(a) the frame sequential method [FS],
(b) the side by side method [SbS], and
(c) the top and bottom method [T&B]
are set in the frame configuration information (Frame Packing Arrangement SEI) in the stereo video information box 302 as described with reference to Figs. 8 and 9.

A device which executes the reproduction and display of the three-dimensional images is able to identify that the images which are stored in the MP4 file are three-dimensional images according to which method by referencing the three-dimensional image details information in the stereo video information box 302.
That is, for example, it is possible to identify that the images which are stored in the MP4 file are three-dimensional images according to which method by referencing the set values of the frame configuration information (Frame Packing Arrangement SEI) as described with reference to Figs. 8 and 9 and it is possible to generate, reproduce and display the correct three-dimensional image display data by executing a restoration process which corresponds to the method of the storage images.

Accordingly, for example, it is possible to prevent the phenomena where three-dimensional image data is erroneously displayed in a display device which does not have a three-dimensional image display function.
In addition, it is possible to know in advance whether data is recorded according to the three-dimensional image display process which is able to be executed in the device itself, it is possible to start the process of encoding and the like by acquiring actual data which is stored in the actual data box (mdat) 104 (refer to Fig. 1) only in the case where it is determined that processing in the device itself is possible, and it is possible to prevent the phenomena where unnecessary processes are executed.

Here, in the example described above, the example has been described where three-dimensional image details information is recorded according to each of the methods of
(a) the frame sequential method [FS],
(b) the side by side method [SbS], and
(c) the top and bottom method [T&B],
but there may be a configuration where information is recorded according to another method. In addition, there may be a configuration where three-dimensional image details information is created in another format and recorded in the AV codec box (avc1) without being limited to the frame configuration information (Frame Packing Arrangement SEI) as described with reference to Figs. 8 and 9.

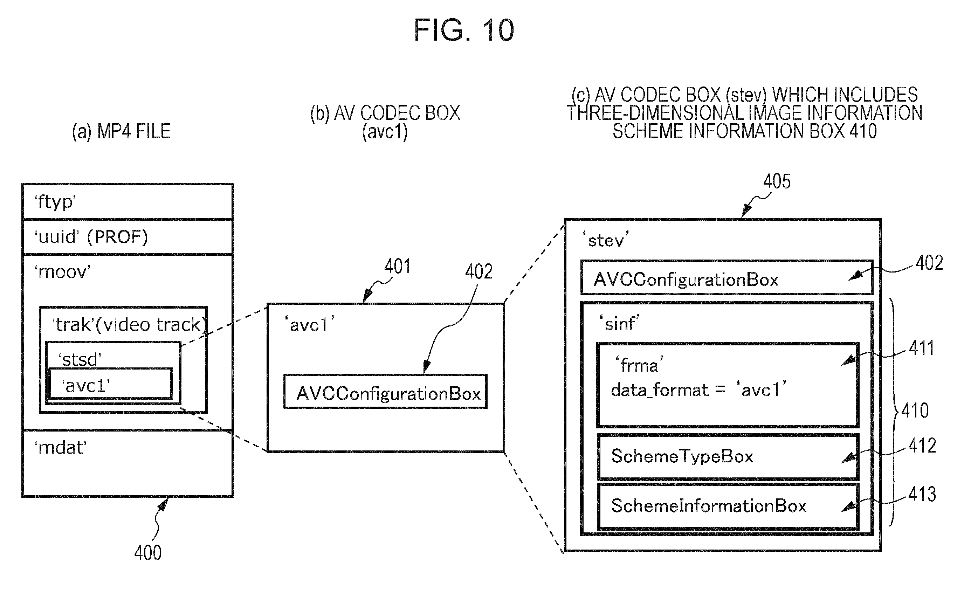

[2C. (3) Example where Three-dimensional Image Details Information is Recorded Using Scheme Information Box (sinf) Specified as Extended Configuration of AV Codec Box (avc1) (Example 3) ]
Next, an example will be described where three-dimensional image details information is recorded using a scheme information box (sinf) which is specified as an extended configuration of the AV codec box (avc1) of the MP4 file with reference below to Fig. 10.

Here, as described previously with reference to Fig. 1, the AV codec box (avc1) is a box which is set at a lower level that the sample description box (stsd) which is further at a lower level than the track box 111 which is a lower level of a movie box (moov).
The AV codec box (avc1) is a box where codec information and the like of a sample, which is a data section into which the actual data stored in the actual data box (mdat) is segmented, is recorded as described previously.

Here, the codec information of all of the samples which are included in the track in this case is set to the AV codec box (avc1). It is possible to set one or a plurality of the AV codec boxes (avc1) to the lower level of the sample description box (stsd). However, in the case where the content is the same, a plurality of settings is not necessary. That is, it is not necessary that the number of samples and AV codec boxes match and it is possible to set the AV codec boxes to be one even if the number of samples is a plurality.

In the example 3, the three-dimensional image details information is recorded in the AV codec box (avc1) in the same manner as the example 2. However, in the example 3, the three-dimensional image details information is recorded using the scheme information box (sinf) which is specified as the extended configuration of the AV codec box (avc1) of the MP4 file.

In ISO/IEC 14496 which specifies the MP4 file format, a case where the storage data of the MP4 file is recorded as any type of conversion data such as the data which is stored in the MP4 being stored as, for example, encoding data, the scheme information box (sinf) is specified as a region for recording data configuration information with regard to the data. For example, in a case where the storage data of the MP4 file is recorded as conversion data which has been encoded, the scheme information box (sinf) is specified as a region for recording the encoding format information.

Here, in the current specifications of ISO/IEC 14496 which specifies the MP4 file format, the scheme information box (sinf) which stores the data configuration information is specified so that it is possible to be set to one of the lower levels of the AV codec box (avc1).
For example, in the case where the MP4 storage data is encoding data, it is possible to acquire information which is necessary for the decoding of the encoding data by referencing the scheme information box (sinf) which is set in the AV codec box (avc1).

In the present example, the scheme information box is used. That is, the scheme information box which stores the data configuration information is defined with regard to three-dimensional (stereo) images.
An example will be described where the data configuration information with regard to three-dimensional (stereo) images, that is, the three-dimensional image details information is stored in the scheme information box (sinf) with reference to Fig. 10.

The data configuration of
(a) an MP4 file 400,
(b) an AV codec box (avc1) 401, and
(c) an AV codec box 405 which includes a three-dimensional image information scheme information box 410
is shown in Fig. 10.

For example, in a case where three-dimensional images are not included in the MP4 file 400, the scheme information box (sinf) which records the three-dimensional image details information is not set and the AV codec box (avc1) in the MP4 file is, for example, a data configuration which only has the AV codec box (avc1) 401 as shown in Fig. 10(b), that is, an AVC data configuration information box [AVC Configuration Box] 402 which stores AVC data configuration information. Codec information which is necessary for the MP4 data restoration process is recorded in the AVC data configuration information box [AVC Configuration Box] 402.

In the case where three-dimensional images are included in the MP4 file, the AV codec box (avc1) 401 which is shown in Fig. 10(b) is set as the AV codec box 405 which includes the three-dimensional image information scheme information box 401 as shown in Fig. 10(c).

Here, a code (4CC: four-character-code), which is equivalent to the box name of the AV codec box (avc1) 401 which does not include the three-dimensional image information scheme information box shown in Fig. 10(b), is [avc1].
However, the AV codec box 405 which includes the three-dimensional image information scheme information box 410 shown in Fig. 10(c) changes the code (4CC: four-character-code) which is equivalent to the box name to [stev] which indicates that information which relates to the stereo video data is included. That is, it is possible to identify the AV codec box 405 which includes the three-dimensional image information scheme information box 410 from the box name (4CC). Here, the box name (4CC) corresponds to a file name of the AV codec box 405 and the reproduction device is able to identify the AV codec box which includes the three-dimensional image information scheme information box from the file name.

The three-dimensional image information scheme information box 410 has each of the boxes of
a format information box (frma) 411,
a scheme type box (SchemeTypeBox) 412, and
a scheme details information box (SchemeInformationBox) 413.

The format information box (frma) 411 records format information such as
data_format='avc1'
in a case where the format information is recorded, that is, for example, there is data according to the AVC format.

In the scheme type box (SchemeTypeBox) 412, information which indicates the type of the scheme information box 410 is recorded. In this example, since the scheme information box 410 is a scheme information box where the details information of three-dimensional images is stored, type information is recorded which indicates that there is the scheme information box which stores the three-dimensional image details information in the scheme type box (SchemeTypeBox) 412.

In the scheme details information box (SchemeInformationBox) 413, specific details information on three-dimensional images is recorded. The three-dimensional images details information which is stored in the scheme details information box (SchemeInformationBox) 413 includes information in the same manner as the frame configuration information (Frame Packing Arrangement SEI) described previously in the Example 2. The information which is necessary when executing the reproduction and display processes of the three-dimensional images is recorded.
Specifically, for example, three-dimensional image details information is recorded to correspond to each of the methods of
(a) the frame sequential method [FS],
(b) the side by side method [SbS], and
(c) the top and bottom method [T&B].

The device which executes the reproduction and display of the three-dimensional images is able to identify that the images which are stored in the MP4 file are three-dimensional images according to which of the methods by acquiring three-dimensional image details information from the scheme details information box (SchemeInformationBox) 413 of the three-dimensional image information scheme information box 410 which is set as lower level information of the AV codec box (avc1). The reproduction device is able to generate, reproduce and display the correct three-dimensional image display data by executing a restoration process which corresponds to the method of the storage images by referencing the storage information of the scheme details information box (SchemeInformationBox) 413 of the three-dimensional image information scheme information box 410.

Accordingly, for example, it is possible to prevent the phenomena where three-dimensional image data is erroneously displayed in a display device which does not have a three-dimensional image display function.
In addition, it is possible to know in advance whether data is recorded according to the three-dimensional image display process which is able to be executed in the device itself, it is possible to start the process of encoding and the like by acquiring actual data which is stored in the actual data box (mdat) 104 (refer to Fig. 1) only in the case where it is determined that processing in the device itself is possible, and it is possible to prevent the phenomena where unnecessary processes are executed.

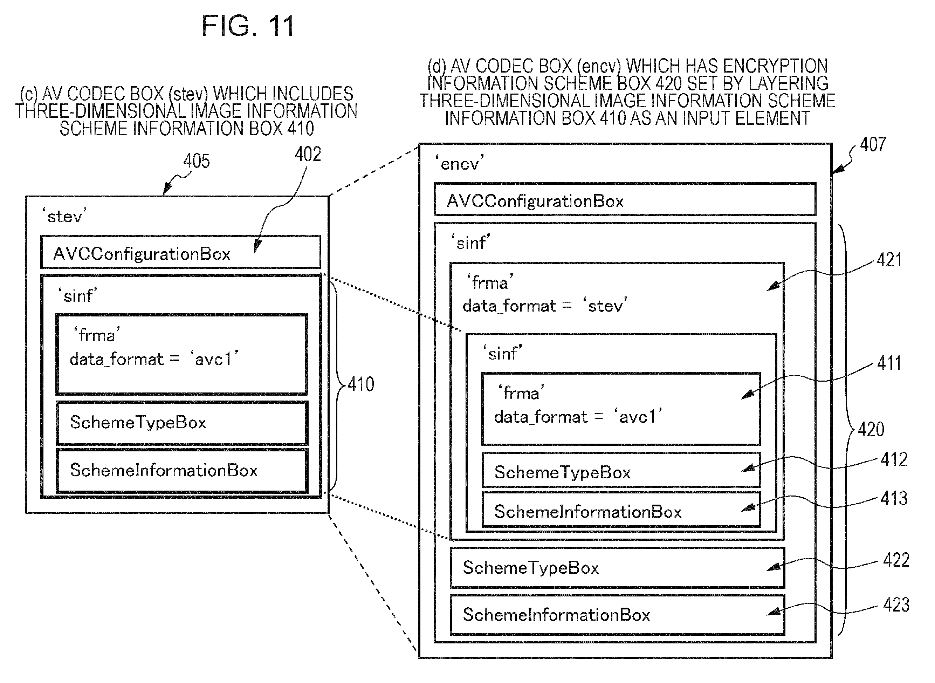

Next, the use configuration of the scheme information box will be described in a case where the data which is stored in the actual data box (mdat) of the MP4 file is three-dimensional image data and furthermore is encoding data with reference to Fig. 11.

The data configuration of
(c) the AV codec box 405 which includes the three-dimensional image information scheme information box 410, and
(d) an AV codec box 407 which has an encoding information scheme information box 420 which is set by layering the three-dimensional image information scheme information box 410 as a nest
is shown in Fig. 11.
The data of (c) is the AV codec box 405 which has the same configuration of the data of Fig. 10(c).

In the case where the data which is stored in the actual data box of the MP4 file is three-dimensional image data and furthermore is encoded, not only first data configuration information (three-dimensional image details information) but also second data configuration information (encoding information) is necessary in the reproduction device.
In the example shown in Fig. 11, there is a configuration where the individual pieces of data configuration information are set as individual information scheme boxes, are layered, and recorded.

In the example shown in Fig. 11, a plurality of the scheme information boxes (sinf) are stored in the AV codec box by being layered (nested state).
That is, as shown in the AV codec box (encv) 407 shown in Fig. 11(d), the two scheme information boxes of
(1) a first scheme information box (sinf) 410 which stores data configuration information (three-dimensional image details information) with regard to three-dimensional (stereo) images, and
(2) a second scheme information box (sinf) 420 which stores data configuration information (encoding format information) with regard to the encoding process
are stored in the AV codec box by being layered, that is, set in a nested state.

In the present embodiment, as shown in Fig. 11(d), the first scheme information box (sinf) 410 which stores data configuration information (three-dimensional image details information) with regard to three-dimensional (stereo) images is a box which is set at a lower level to a format information box (frma) of the second scheme information box (sinf) 420 which stores data configuration information (encoding format information) with regard to the encoding process.

Here, the code (4CC: four-character-code), which is equivalent to the box name of the AV codec box (avc1) 401 which does not include the three-dimensional image information scheme information box shown in Fig. 10(b), is [avc1], and the AV codec box 405 which includes the three-dimensional image information scheme information box 410 shown in Fig. 11(c) changes the code (4CC: four-character-code) which is equivalent to the box name to [stev] which indicates that the information which relates to the stereo video data is included.

Furthermore, the AV codec box 407 which has an encoding information scheme information box 420 which has the three-dimensional image information scheme information box 410 as shown in Fig. 11(d) as a nest sets the code (4CC: four-character-code) which is equivalent to the box name as [encv] which indicates that information which relates to the encoding video data is included. Due to this, it is possible to identify the AV codec box 405 which includes the encoding information scheme information box 420 from the box name (4CC).

The data configuration information (three-dimensional image details information) with regard to the three-dimensional (stereo) images is stored in the first scheme information box (sinf) 410.
The first scheme information box (sinf) 410 has the same boxes described previously with reference to Fig. 10, that is, has each of the boxes of
the format information box (frma) 411,
the scheme type box (SchemeTypeBox) 412, and
the scheme details information box (SchemeInformationBox) 413.

The format information box (frma) 411 records format information such as
data_format='avc1'
in a case where the format information is recorded, that is, for example, there is data according to the AVC format.

In the scheme type box (SchemeTypeBox) 412, information which indicates the type of the scheme information box 410 is recorded. In this example, since the scheme information box 410 is a scheme information box where the details information of three-dimensional images is stored, type information is recorded which indicates that there is the scheme information box which stores the details information of three-dimensional image in the scheme type box (SchemeTypeBox) 412.

In the scheme details information box (SchemeInformationBox) 413, specific details information on three-dimensional images is recorded. The three-dimensional images details information which is stored in the scheme details information box (SchemeInformationBox) 413 includes information in the same manner as the frame configuration information (Frame Packing Arrangement SEI) described previously in the Example 2.
That is, for example, three-dimensional image details information is recorded to correspond to each of the methods of
(a) the frame sequential method [FS],
(b) the side by side method [SbS], and
(c) the top and bottom method [T&B].

It is possible for the reproduction device to obtain the details information of three-dimensional images which are stored in the actual data box (mdat) in the MP4 file by referencing the three-dimensional image details information which is stored in the first scheme information box (sinf) 410.

In addition, the data configuration information (encoding format information) with regard to encoding data is stored in the second scheme information box (sinf) 420.
The second scheme information box (sinf) 420 has each of the boxes of
a format information box (frma) 421,
a scheme type box (SchemeTypeBox) 422, and
a scheme details information box (SchemeInformationBox) 423.

The format information box (frma) 421 maintains the first scheme information box (sinf) 410 which stores the data configuration information (three-dimensional image details information) with regard to the three-dimensional (stereo) images as data of a lower level layer, that is, in a nested state.
Furthermore, format information is recorded. In this example, as the format data which indicates that the first scheme information box (sinf) 410 which stores the data configuration information (three-dimensional image details information) with regard to the three-dimensional (stereo) images is stored,
the format information of
data_format='stev'
is recorded.

Information which indicates the type of the scheme information box 420 is recorded in the scheme type box (SchemeTypeBox) 422. In this example, since the scheme information box 420 is a scheme information box where the details information with regard to the encoding process is stored, information is recorded which indicates that there is the scheme information box which stores the encoding details information in the scheme type box (SchemeTypeBox) 422.

In the scheme details information box (SchemeInformationBox) 423, specific details information on encoding process is recorded. The encoding information which is stored in the scheme details information box (SchemeInformationBox) 423 records information which is necessary for decoding of the encoding data in the reproduction device.

The reproduction device is able to obtain the information which is necessary for the encoding process of the data which is stored in the actual data box (mdat) of the MP4 file by referencing the encoding format information which is stored in the second scheme information box (sinf) 420.

In the case of performing a reproduction process and a display process, the scheme information box which corresponds to each piece of data configuration information as shown in Fig. 11(d) is set in the case where different data configuration information, that is, different data configuration information such as three-dimensional image information, encoding information, or the like is necessary and this is recorded in the AV codec box as a layering configuration (nesting).
It is possible to acquire all of the information which is necessary for the reproduction and display processes of the actual data which is stored in the MP4 file from an AV codec box by performing a data configuration information recording process such as this.

Here, the example which is described with reference to Fig. 11 is an example where the two scheme information boxes below,
(1) a first scheme information box (sinf) 410 which stores data configuration information (three-dimensional image details information) with regard to three-dimensional (stereo) images, and
(2) a second scheme information box (sinf) 420 which stores data configuration information (encoding format information) with regard to the encoding process,
that is, the scheme information boxes which correspond to two different piece of data configuration information, are stored in the AV codec box by being layered, that is, set in a nested state.

Other than this, it is possible for a plurality of scheme information boxes which are set in a plurality of layers which are, for example, three or more to be set with regard to various data configuration information which relates to the actual data which is stored in the MP4 file. By using the layering (nesting) configuration of the scheme information box as shown in the present example, it is possible for various data configuration information and data conversion information which is necessary during reproduction and display processes to be set and recorded as management information.

The reproduction device is able to reproduce and display the actual data which is stored in the MP4 file without errors by acquiring this management information.

### [3. Image Processing Sequence Executed by Image Processing Device]

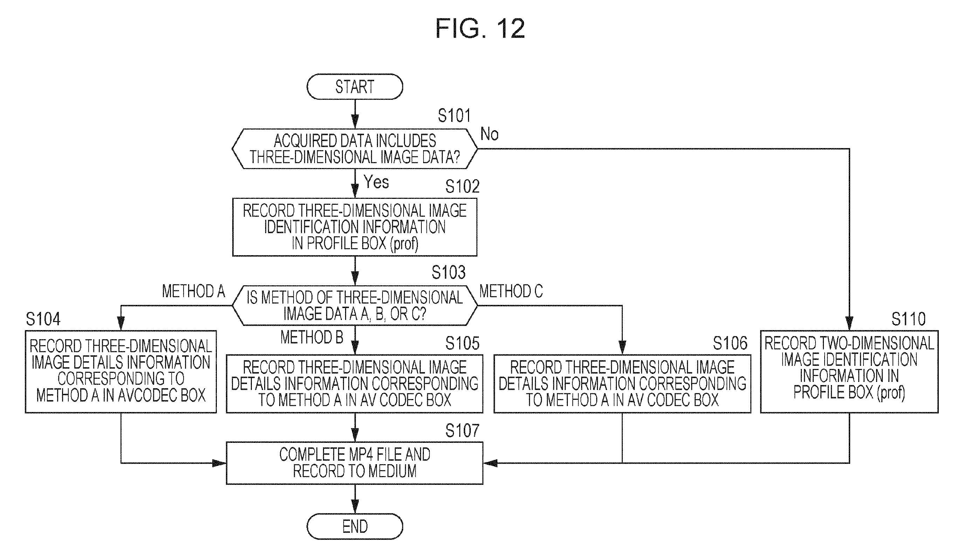

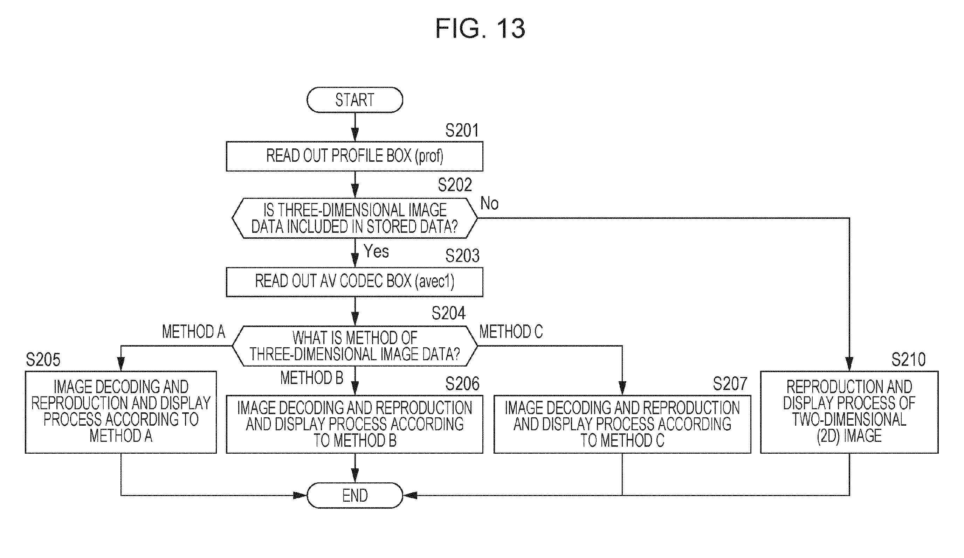

Next, image processing sequences which are executed by the image processing device of the embodiment of the present invention will be described with reference to flowcharts shown in Figs. 12 and 13.
Fig. 12 is a flowchart which describes a recording process sequence of image data.
Fig. 13 is a flowchart which describes a reproduction process sequence of image data.

First, a recording process sequence of image data will be described with reference to the flowchart shown in Fig. 12.
The process according to the flowchart shown in Fig. 12 is executed in an imaging device such as a camera which executes a process where, for example, an image is imaged and recorded in a recording medium. For example, it is a process which is executed under control of a control section such as a CPU which is provided in the imaging device.
The process of each step of the flowchart shown in Fig. 12 will be described.

In step S101, it is determined whether or not data which is intended to be, for example, obtained using an imaging process and recorded in a recording medium includes three-dimensional image data.
In a case where the three-dimensional image data is included in the data which is intended to be recorded to the medium in step S101, the determination of step S101 is Yes and the process proceeds to step S102.

In step S102, three-dimensional image identification information is recorded in the profile box of the MP4 file.
This process is a process which corresponds to [3-1. (1) Example where Three-dimensional Image Identification Information is Recorded in Profile Box (uuid(PROF)) (Example 1)] described above. That is, it is a process which was described with reference to Figs. 2 and 3.

The values of the flags shown in Fig. 3 are set according to the types of the data which is intended to be recorded as the flags below described with reference to Fig. 2, that is, the values of each of the flags of
the stereo video flag (stereo video flag) 201, and
the mixed stereo video flag (mixed stereo video flag) 202.

Next, in step S103, the method of the three-dimensional image data which is intended to be recorded is determined. Here, in the flow, there is an example where three types of A, B, and C are identified. These correspond to, for example, the three types below which are described previously in the Examples 2 and 3. These correspond to each of the methods of
(a) the frame sequential method [FS],
(b) the side by side method [SbS], and
(c) the top and bottom method [T&B].

In the case where the determination in step S103 determines method A, the process proceeds to step S104 and the three-dimensional image details information which corresponds to the method A is recorded in the AV codec box of the MP4 file.
In addition, in the case where the determination in step S103 determines method B, the process proceeds to step S105 and the three-dimensional image details information which corresponds to the method B is recorded in the AV codec box of the MP4 file.
In addition, in the case where the determination in step S103 determines method C, the process proceeds to step S106 and the three-dimensional image details information which corresponds to the method C is recorded in the AV codec box of the MP4 file.

The processes of steps S104 to S106 correspond to the example 2 or the example 3 which were described previously.
That is, the processes correspond to [3-2. (2) Example where Three-dimensional Image Details Information is Recorded in AV Codec Box (avc1) (Example 2)] and [3-3. (3) Example where Three-dimensional Image Details Information is Recorded using Scheme Information Box (sinf) Specified as Extended Configuration of AV Codec Box (avc1) (Example 3)] described above.
Here, there may be a configuration where either of the process of the example 2 or the process of the example 3 is executed and there may be a configuration where both are executed.

Here, as described with reference to Fig. 1, the AV codec box is a box which stores codec information which is set at a lower level that the sample description box (stsd) which is further at a lower level than the track box which is a lower level of a movie box (moov).

As described with reference to Figs. 4 to 9, in the process of the example 2, the stereo video information box 302 (refer to Fig. 4) is set in the AV codec box, and here, for example, the frame configuration information is recorded as three-dimensional image details information described with reference to Figs. 8 and 9. Different data is recorded according to the method of the three-dimensional images as described with reference to Figs. 8 and 9.

In addition, in the case of performing the process of the example 3, three-dimensional image details information is recorded in the scheme information box by being set in the scheme information box as described with reference to Figs. 10 and 11. Also in this case, different data is recorded according to the method of the three-dimensional images.

After the completion of the processes of steps S104 to S106, the process proceeds to step S107, the MP4 file is completed, and a recording process is executed with regard to a medium.

Here, in a case where it is determined that the three-dimensional image data is not included in the acquired data in step S101, the determination of step S101 determines No and the process proceeds to step S110. In step S110, the two-dimensional image identification information is recorded in the profile box of the MP4 file.

This process is a process which corresponds to [3-1. (1) Example where Three-dimensional Image Identification Information is Recorded in Profile Box (uuid(PROF)) (Example 1)] described above. That is, it is a process which was described with reference to Figs. 2 and 3. That is, the values of the flags which indicate that the data which is intended to be recorded is two-dimensional image data are set as the value of each flag of the flags below shown in Fig. 2 of
the stereo video flag (stereo video flag) 201, and
the mixed stereo video flag (mixed stereo video flag) 202.
After that, the process proceeds to step S107, the MP4 file is completed, and a recording process is executed with regard to a medium.

Here, the flow shown in Fig. 12 was described as an example of a creation process of an MP4 file in the data recording process with regard to a recording medium, but it is sufficient if the creation process of the MP4 file is performed with the same process sequence as a case where an MP4 file is generated as communication data.

In addition, the flow shown in Fig. 12 describes a setting example where both of the three-dimensional image identification information of the profile box in the example 1 described above and the three-dimensional image details information of the AV codec box in the example 2 or 3 are read out, but there may be a configuration where a process is performed where only the three-dimensional identification information of the profile box in the example 1 is read out and used or there may be a configuration where a process is performed where only the three-dimensional details information of the profile box in the example 2 or 3 is read out and used.

Next, a reproduction process sequence of image data will be described with reference to the flowchart shown in Fig. 13.
The process according to the flowchart shown in Fig. 13 is executed in a reproduction device which executes the process with regard to, for example, an MP4 file which is read out from a recording medium or an MP4 file which is received as communication data. For example, it is a process which is executed under control of a control section such as a CPU which is provided in the reproduction device.
The process of each step of the flowchart shown in Fig. 13 will be described.

First, in step S201, the information in the profile box (PROF) of the MP4 file is read out.
This process is a process which corresponds to [3-1. (1) Example where Three-dimensional Image Identification Information is Recorded in Profile Box (uuid(PROF)) (Example 1)] described above. That is, it is a process where information in the profile box (PROF) of the MP4 file is read out as described with reference to Figs. 2 and 3.

Specifically, the flags below shown in Fig. 2, that is, the values of each of the flags of
the stereo video flag (stereo video flag) 201, and
the mixed stereo video flag (mixed stereo video flag) 202 are read out.

Next, as described previously with reference to Fig. 3, it is possible to identify the data below using the set values of the flags.

### (Case 1)

In the case where the stereo video flag is equal to one and the mixed stereo video flag is equal to zero, it is determined that
(a) the image data which is stored in the MP4 file is all three-dimensional image data (stereo images).

### (Case 2)

In the case where the stereo video flag is equal to zero and the mixed stereo video flag is equal to zero, it is determined that
(b) the image data which is stored in the MP4 file is all two-dimensional image data.

### (Case 3)

In the case where the stereo video flag is equal to zero and the mixed stereo video flag is equal to one, it is determined that
(c) the image data which is stored in the MP4 file is mixed data of three-dimensional images (stereo images) and two-dimensional images.

In a case where it is determined that three-dimensional image data is not included in step S202 by reading out the flags as the three-dimensional image identification information of the profile box in step S201, the process proceeds to step S210 and the two-dimensional image data is acquired from the MP4 file and reproduction and display are performed.

On the other hand, in a case where it is determined that three-dimensional image data is included in step S202, the process proceeds to step S203.
Information in the AV codec box of the MP4 file is acquired in step S203.
The process corresponds to a process of the recording data of [3-2. (2) Example where Three-dimensional Image Details Information is Recorded in AV Codec Box (avc1) (Example 2)] or [3-3. (3) Example where Three-dimensional Image Details Information is Recorded using Scheme Information Box (sinf) Specified as Extended Configuration of AV Codec Box (avc1) (Example 3)] described above.

For example, in a case where the three-dimensional information recording process corresponding to the example 2 is performed, as described with reference to Figs. 4 to 9, the stereo video information box 302 (refer to Fig. 4) is set in the AV codec box, and here, for example, the frame configuration information is recorded as three-dimensional image details information described with reference to Figs. 8 and 9. The three-dimensional image details information is read out from the stereo video information box 302 (refer to Fig. 4) in step S203.

For example, by the set values of the frame configuration information being read out as, for example, the three-dimensional image detail information as described with reference to Figs. 8 and 9, it is possible to identify that the data which is intended to be recorded is data according to which of the methods of
(a) the frame sequential method [FS],
(b) the side by side method [SbS], and
(c) the top and bottom method [T&B].

In addition, in the case where the three-dimensional information recording process which corresponds to the example 3 is performed, the scheme information box is recorded as lower level data of the AV codec box as described with reference to Figs. 10 and 11 and the three-dimensional image details information is read out from the scheme information box.

It is possible to confirm the three-dimensional image method of the data which is intended to be reproduced by acquiring at least the three-dimensional image details information which is recorded according to which of either of the methods in the example 2 and the example 3. Due to the confirmation, the method determination process of step S204 is executed. That is, the data which is intended to be reproduced is determined to be either of methods A, B, or C in step S204 based on the three-dimensional image details information which is acquired from the AV codec box.

In a case where it is determined to be three-dimensional image data which corresponds to method A, the process proceeds to step S205, the decoding (decoding and restoration processes) of the images which correspond to method A is performed, and the reproduction and display processes are executed.
In a case where it is determined to be three-dimensional image data which corresponds to method B, the process proceeds to step S206, the decoding (decoding and restoration processes) of the images which correspond to method B is performed, and the reproduction and display processes are executed.
In a case where it is determined to be three-dimensional image data which corresponds to method C, the process proceeds to step S207, the decoding (decoding and restoration processes) of the images which correspond to method C is performed, and the reproduction and display processes are executed.

In this manner, by performing the processes according to the present invention, the image process device is able to acquire whether or not three-dimensional images are included in the data which is stored in the MP4 file with regard to the recording and reproduction method from the profile box or the AV codec box as the management information in the MP4 file in a case where the three-dimensional images are included in the data.
Accordingly, it is possible to confirm whether or not it is three-dimensional image data which is able to be reproduced by the device itself before the execution of the analysis or the reproduction process by acquiring the actual data of the MP4 file and it is possible to acquire actual data only in a case where it is determined that reproduction is possible and to execute correct decoding and reproduction processes according to the process according to the method.

Here, in the flow shown in Fig. 13, an example has been described where the MP4 file is generated where both of the three-dimensional image identification information in the profile box in the example 1 or the three-dimensional image details information in the AV codec box in the examples 2 and 3 are recorded in the MP4 file which was described in the examples 1 to 3 described above, but there may be a configuration where a process is performed where only the three-dimensional image identification information is recorded in the profile box in the example 1 or there may be a configuration where a process is performed where only the three-dimensional image details information is recorded in the AV codec box in the examples 2 and 3.

### [4. Configuration Example of Image Processing Device of Present Invention]

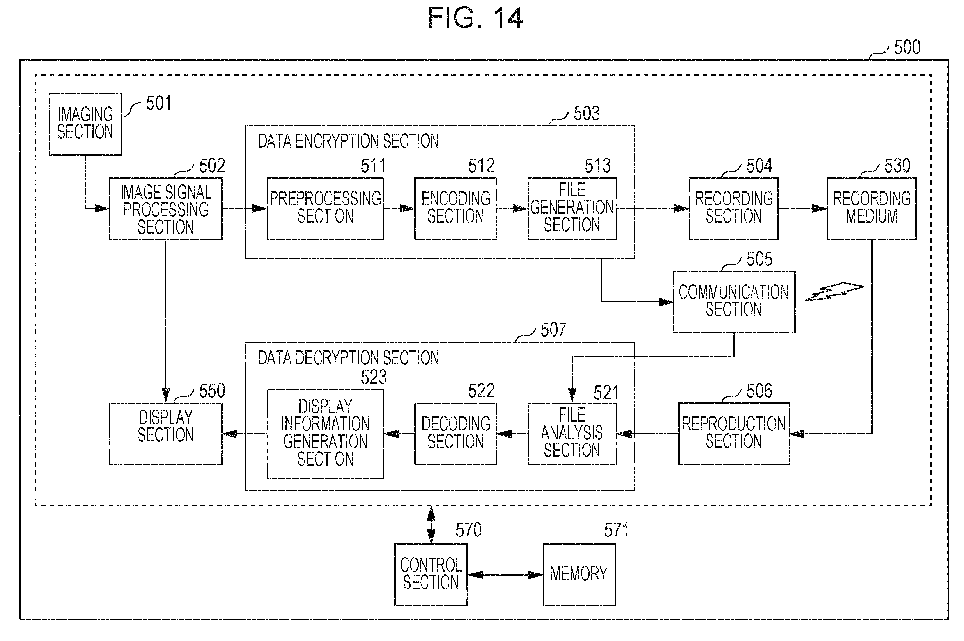

Next, a configuration example of the image processing device of the present invention will be described with reference to Fig. 14. A configuration example of an imaging device 500 as an embodiment of the image processing device of the present invention is shown in Fig. 14. The imaging device 500 has a function where images are imaged from different viewpoints which are applied to three-dimensional image display and has a configuration where it is possible to switch between the imaging of two-dimensional images and three-dimensional images by the user setting a mode.

For example, an imaging section 501 has a plurality of lens sections which are set in different positions and is a configuration where it is possible to image an image from different viewpoints at the same time. An image which is imaged via the plurality of lens sections is input when set in a three-dimensional image imaging mode. Only images which are imaged via one of the lens sections are input when set in a two-dimensional image imaging mode.

An image signal processing section 502 executes signal processing of the imaging image data such as a white balance adjustment.
A data encoding section 503 generates an MP4 file. Preprocessing is executed according to each of the methods in a preprocessing section 511 in a case where the input data is a three-dimensional image. Specifically, for example, an image for MP4 decoding is generated from the imaging image according to each of the methods of described with reference to Figs. 5 to 7, that is, each of the methods of
(a) the frame sequential method [FS],
(b) the side by side method [SbS], and
(c) the top and bottom method [T&B].
For example, in a case where recording data is generated according to the side by side method [SbS] shown in Fig. 6, the imaging images are two images which corresponds to the display L image (frame 0) 334 and the display R image (frame 1) 335 which are shown on the right side of Fig. 6, and an image frame which corresponds to the MP4 decoding result image 331 which is shown on the left side of Fig. 6 is generated by applying these images.

An encoding process (encoding) according to the MP4 format is executed by the data being input into an encoding section 512. Furthermore, a file generation section 513 generates an MP4 file by executing a recording process with regard to the profile box of the three-dimensional image identification information, a recording process with regard to the AV codec box of the three-dimensional image details information which were described previously in the examples 1 to 3, and the like.

The file generation section 513 generates an MP4 file which is an encoding data storage file which includes the encoding data of the image data which is generated using the encoding section 512 and management information of the encoding data.
The file generation section 513 records the three-dimensional image identification information, which indicates whether or not the three-dimensional image data is included in the image data which is stored in the file, in the profile box of the MP4 file when the MP4 file is generated.
The process where the three-dimensional image identification information is recorded in the profile box of the MP4 file corresponds to a process which was described previously with reference to the example 1.

In addition, the file generation section 513 records the three-dimensional image details information on whether or not the identification of the method of the three-dimensional image is possible in the AV codec box in a case where the three-dimensional image data is included in the file storage image data.
The process where the three-dimensional image details information is recorded in the AV codec box corresponds to the process which was described previously with reference to the example 2 and 3.

For example, in a case where a process which corresponds to the example 3 is executed, the file generation section 513 generates a scheme information box which includes the data configuration information where the information, which is applied to the data processing during the reproduction process of the encoding data, is set in category units of the data processing, and a file is generated which is recorded in the management information by the plurality of scheme information boxes in category units being layered.
Here, the file generation section 513 performs a process where the three-dimensional image detail information is recorded in sector data units of a track unit or a sample unit which are sector data of the image data which is stored in the MP4 file.

The MP4 file which is generated in the data encoding section 503 is provided to a recording section 504 and is recorded in a recording medium 530 such as a flash memory, HDD, DVD, or the like.
Alternatively, the MP4 file which is generated in the data encoding section 503 is provided to a communication section 505 and a transmission process is performing by making it into packets.

Here, the MP4 file which includes the encoding data of the image data and the management information of the encoding data is recorded in the recording medium 530 using a data recording process. The three-dimensional image identification information which indicates whether or not three-dimensional image data is included in the image data and the three-dimensional image details information on whether it is possible to identify the method of the three-dimensional images are included in the management information which is included in the MP4 file. Accordingly, it is possible for a device which reads out the MP4 file from the recording medium 530 and carries out reproduction to determine the possibility of reproduction in the device itself by referencing the management information.

For example, the MP4 file which includes the management information which has a layer configuration of the scheme information boxes of the example 3 as described previously is recorded in the recording medium 530. That is, the management information of the MP4 file which is recorded in the recording medium 530 is a configuration where the data configuration information, where the information which is applied to the data processing during the reproduction process of the encoding data is set in category units of the data processing, is layered and recorded. By sequentially acquiring the data configuration information which has been layered, the device which reads out the MP4 file from the recording medium 530 which is an information recording medium and carries out reproduction in this manner is able to execute data processing of a plurality of categories which are different by applying the data configuration information which has been acquired.

Next, the reproduction process of an MP4 file which is recorded in the recording medium 530 or an MP4 file which is received via the communication section 505 will be described. The MP4 file which is recorded in the recording medium 530 such as a flash memory, HDD, DVD, or the like is read out via a reproduction device 506 and is provided to a data decoding section 507. In the same manner, the MP4 file which is received via the communication section 505 is also provided to the data decoding section 507.

First, a file analysis section 521 of the data decoding section 507 acquires the management information of the MP4 file which was received, that is, the management information which is recorded in each of the boxes of the file type box (ftyp), the profile box (uuid(PROF)), and the movie box (moov) which were described previously with reference to Fig. 1.

As described previously with reference to the example 1, the three-dimensional image information which indicates whether or not three-dimensional images are included in the image data which is stored in the actual data box (mdat) of the MP4 file is recorded in the profile box (uuid(PROF)). This is information which was described with reference to Figs. 2 and 3.

In addition, as described with reference to Figs. 2 and 3, the three-dimensional image details information, that is, the details information which relates to the recording and reproduction method of the three-dimensional image data in a case where the image data which is stored in the actual data box (mdat) of the MP4 file is three-dimensional image data, is recorded in the AV codec box which is a lower level of the movie box (moov). This is the information which was described with reference to Figs. 4 to 11. For example, the file analysis section 521 acquires information, for example, in sector data units of a track unit or a sample unit which are sector data of the image data which is stored in the MP4 file in a case of performing analysis of the MP4 file which is used in the configuration of the examples 2 and 3.

The file analysis section 521 of the data decoding section 507 confirms whether or not three-dimensional images are included in the image data which is stored in the actual data box (mdat) of the MP4 file with regard to the method in a case where the three-dimensional images are included by analyzing the management information in the MP4 file.

After that, along with the confirmation information, the MP4 file is provided to a decoding section 522. Here, the processing after that, that is, the decoding process and the like are not executed in a case where it is determined that the storage data of the MP4 file does not correspond to a method which is able to be reproduced in the imaging device 500 from the MP4 file analysis result of the file analysis section 521. This processing control is executed according to a program which is stored in a memory 571 in a control section 570. The control section 570 determines the possibility of reproduction in the device itself by applying the three-dimensional image management information of the MP4 file and performs control where the decoding process of the image data in the decoding section 522 starts after it is determined whether reproduction is possible.

In a case where it is determined that the storage data of the MP4 file corresponds to a method that is able to be reproduced in the imaging device 500 based on the MP4 file analysis result of the file analysis section 521, the decoding process of the MP4 data is started in the decoding section 522. Furthermore, the three-dimensional image method information and the decoding result are provided to a display information generation section 523.

The display information generation section 523 executes the decoding process (refer to Figs. 5 to 7) of the image according to each of the methods depending on the three-dimensional image method information, that is, whether the MP4 file storage data corresponds to, for example, any of the methods described below.
The left-eye image (L image) and the right-eye image (R image) are generated according to each of the methods of
(a) the frame sequential method [FS],
(b) the side by side method [SbS], and
(c) the top and bottom method [T&B].
The display image which is generated by the data decoding section 507 is provided to the display section 550 and image display is performed.

Here, the display information generation section 523 is configured by data processing sections which execute data processing of various categories such as a data processing section which performs generation of the left-eye image and the right-eye image for applying the three-dimensional image display, and, for example, a data processing section which executes the decoding process of the encoding data. The display information generation section 523 is configured by data processing sections which execute data processing of a plurality of different categories which are executed during the reproduction process of the image data which is stored in the MP4 file.

In the process using the MP4 file including the management information which has scheme information boxes which are layered in the example 3 described previously, the file analysis section 521 acquires the layered data configuration information of the management information of the MP4 file and the decoding section 522 and the display information generation section 523 execute data processing of the plurality of different categories by applying the information which is included in the scheme information boxes from the data configuration information in category units acquired by the file analysis section 521.

Here, the control of the processing of each of the configuration sections is controlled in the control section 570. The control section 580 executes control of an imaging process data recording process, generation of communication data, data reception and transmission processes, a data reproduction process, a display process, and the like according to a program which is stored in advance in the memory 571. During the data recording or the data transmission processes, the process control is executed according to the process sequence which is described previously with reference to the flowchart of Fig. 12, and during the data reproduction process, the process control is executed according to the process sequence which is described previously with reference to the flowchart of Fig. 13.

Above, the invention has been analyzed in detail while referencing specific examples. However, it should be clear by those skilled in the art that various modifications and alterations to the examples are possible within the scope which does not depart from the concept of the present invention. That is, the present invention has been disclosed in a form of an exemplification and this is not to be interpreted as limiting. The section of the range of the claims is to be reference to in order to determine the concept of the present invention.

In addition, the series of processes which is described in the specifications are able to be executed using hardware, software, or a composite configuration of both. In a case where the processes are executed using software, it is possible for a program which is recorded in a process sequence to be executed by being installed in a memory in a computer with specialized hardware built in or for a program to be executed by being installed in a general computer which is able to execute various processes. For example, it is possible for a program to be recorded in advance in a recording medium. Other than being installed onto a computer from a recording medium, it is possible for a program to be received via a network such as a LAN (Local Area Network) or the Internet and installed to a recording medium such as a built-in hard disk.

Here, each type of process which is described in the specifications may not only be executed in a time series manner according to the description but may be executed in parallel or individually according to the processing capacity of the device which executes the process or as necessary. In addition, a system in the specifications is a logical collective configuration of a plurality of devices and is not limited to each of the devices of the configuration being in the same housing.

### Industrial Applicability

As described above, according to the embodiments of the present invention, there is a configuration where three-dimensional image management information such as three-dimensional image identification information which relates to whether or not three-dimensional image data is included in an MP4 file and three-dimensional image details information which is able to identify the recording method and the like of three-dimensional images is recorded in the profile box or the AV codec box of the MP4 file as management information. Accordingly, a device which acquires the MP4 file and attempts to carry out reproduction is able to confirm whether or not three-dimensional images are included in the image data which is stored in the MP4 file and further the method thereof by referencing the three-dimensional image management information which is recorded in the management information of the MP4 file, is able to determine the possibility of reproduction, and is able to smoothly execute decoding and reproduction processes which are appropriate for each three-dimensional image method.

### Reference Signs List

100 MP4 file
101 file type box (ftyp)
102 profile box (uuid (PROF))
103 movie box (moov)
104 actual data box (mdat)
111 track box (trak)
112 sample description box (stsd)
113 AV codec box
201 stereo video flag (stereo video flag)
202 mixed stereo video flag (Mixed stereo video flag)
301 data region
302 stereo video information box (Stereo Video Description Box)
321 decode image frame
322 display image frame
331 MP4 decoding result image
332 unpack L image (frame 0)
333 unpack R image (frame 1)
334 display L image (frame 0)
335 display R image (frame 1)
341 MP4 decoding result image
342 unpack L image (frame 0)
343 unpack R image (frame 1)
344 display L image (frame 0)
345 display R image (frame 1)
400 MP4 file
401 AV codec box (avc1)
402 AVC data configuration information box [AVCConfigurationBox]
405 AV codec box
407 AV codec box (encv)
410 three-dimensional information scheme information box
411 format information box (frma)
412 scheme type box (SchemeTypeBox)
413 scheme details information box (SchemeInformationBox)
420 encoding information scheme information box
421 format information box (frma)
422 scheme type box (SchemeTypeBox)
423 scheme details information box (SchemeInformationBox)
500 imaging device
501 imaging section
502 image signal processing section
503 data encoding section
504 recording section
505 communication section
506 reproduction section
507 data decoding section
511 preprocessing section
512 encoding section
513 file generation section
521 file analysis section
522 decoding section
523 display information generation section
530 recording medium
550 display section
570 control section
571 memory

## Claims

1. An image processing device comprising:
an encoding section which executes an image data encoding process; and
a file generation section which generates an encoding data storage file which includes encoding data which is generated by the encoding section and management information of the encoding data,
wherein the file generation section performs a generation process of a file where three-dimensional image identification information, which indicates whether or not three-dimensional image data is included in image data which is stored in a file, is recorded in the management information.

2. The image processing device according to Claim 1,
wherein the file generation section generates a file where three-dimensional image identification information is recorded in the management information so that it is possible to identify any of (a) to (c) where
(a) image data which is stored in the file is only three-dimensional image data,
(b) image data which is stored in the file is only two-dimensional image data, and
(c) image data which is stored in the file is mixed data of three-dimensional image data and two-dimensional image data.

3. The image processing device according to Claims 1 or 2,
wherein the file generation section has a configuration where generation of an MP4 file is executed and generates a file which records the three-dimensional image identification information in a profile box of the MP4 file.

4. The image processing device according to any of Claims 1 to 3,
wherein the file generation section generates a file which includes three-dimensional image details information, which is able to identify a three-dimensional image method, in the management information in a case where the three-dimensional image data is included in the file storage image data.

5. The image processing device according to Claim 4,
wherein the file generation section records information which, as the three-dimensional image details information, identifies that the file storage image data is three-dimensional image data according to which of methods of (a) to (c) where
(a) frame sequential method,
(b) side by side method, and
(c) top and bottom method.

6. The image processing device according to Claims 4 or 5,
wherein the file generation section has a configuration where the generation of an MP4 file is executed and generates a file which records the three-dimensional image detail information in an AV codec box of the MP4 file.

7. The image processing device according to Claim 6,
wherein the file generation section generates a file which sets a scheme information box which records the three-dimensional image details information in a lower level of the AV codec box of the MP4 file.

8. The image processing device according to Claim 7,
wherein the file generation section generates a file which is recorded so that there is layering of a first scheme information box where the three-dimensional image details information is recorded in a lower level of the AV codec box of the MP4 file and a second scheme information box which is data configuration information which corresponds to the image data stored in the MP4 file and is different to the three-dimensional image details information is recorded.

9. The image processing device according to any one of Claims 6 to 8,
wherein the file generation section performs a process where the three-dimensional image details information is recorded in sector data units of a track unit or a sample unit which are sector data of the image data which is stored in the MP4 file.

10. An image processing device comprising:
a file analysis section which analyses an encoding data storage file which includes encoding data of image data and management information of the encoding data;
a decoding section which executes an image data decoding process; and
a control section which executes data processing control,
wherein the file analysis section acquires three-dimensional image management information which is recorded in the management information, and
the control section determines possibility of reproduction in a device itself by using the three-dimensional image management information and performs control where a decoding process of the image data in the decoding section starts after it is determined whether reproduction is possible.

11. The image processing device according to Claim 10,
wherein the encoding data storage file is an MP4 file, and
the file analysis section acquires the three-dimensional image management information which is recorded in a profile box of the MP4 file and identifies any of (a) to (c) where
(a) the image data which is stored in the file is only three-dimensional image data,
(b) the image data which is stored in the file is only two-dimensional image data, and
(c) the image data which is stored in the file is mixed data of three-dimensional image data and two-dimensional image data.

12. The image processing device according to Claims 10 or 11,
wherein the encoding data storage file is an MP4 file, and
the file analysis section acquires the three-dimensional image management information which is recorded in an AV codec box of the MP4 file and performs a recording method identification process with regard to the three-dimensional data which is included in the file storage image data.

13. The image processing device according to Claim 12,
wherein the file analysis section acquires the three-dimensional image management information which is recorded in the AV codec box of the MP4 file and identifies a method of the three-dimensional image data which is included in the file storage image data.

14. The image processing device according to Claim 13,
wherein the file analysis section acquires the three-dimensional image management information which is recorded in the AV codec box of the MP4 file and identifies that the three-dimensional image data which is included in the file storage image data is three-dimensional image data according to which of methods (a) to (c) where
(a) frame sequential method,
(b) side by side method, and
(c) top and bottom method.

15. An information recording medium, in which an MP4 which includes encoding data of image data and management information of the encoding data is recorded,
wherein the management information includes three-dimensional image management information which indicates whether or not three-dimensional image data is included in the image data, and
possibility of reproduction in a device itself is determinable by referencing the three-dimensional image management information in the device which reads out and reproduces the MP4 file.

16. An image processing method, which is executed in an image processing device, comprising:
an encoding process step of executing of an image data encoding process by an encoding section; and
a file generating step of generating an encoding data storage file which includes encoding data which is generated by the encoding section and management information of the encoding data by a file generation section,
wherein the file generating step performs a process of generating files where three-dimensional image identification information which indicates whether or not three-dimensional image data is included in the image data stored in the file is recorded in the management information.

17. An image processing method, which is executed in an image processing device, comprising:
a file analyzing step of analyzing an encoding data storage file which includes encoding data of image data and management information of the encoding data and acquiring of three-dimensional image management information which is recorded in the management information by a file analysis section; and
a control step of determining possibility of reproduction in a device itself by applying the three-dimensional image management information and controlling a start of a decoding process of the image data in a decoding section after it is determined that reproduction is possible by a control section.

18. A program which executes image processing in an image processing device comprising:
an encoding process step of executing of an image data encoding process by an encoding section; and
a file generating step of generating an encoding data storage file which includes encoding data which is generated by the encoding section and management information of the encoding data by a file generation section,
wherein the file generating step performs a process of generating files where three-dimensional image identification information which shows whether or not three-dimensional image data is included in the image data stored in the file is recorded in the management information.

19. A program which executes image processing in an image processing device comprising:
a file analyzing step of analyzing of an encoding data storage file which includes encoding data of image data and management information of the encoding data and acquiring of three-dimensional image management information which is recorded in the management information by a file analysis section; and
a control step of determining possibility of reproduction in a device itself by applying the three-dimensional image management information and controlling a start of a decoding process of the image data in a decoding section after it is determined that reproduction is possible by a control section.
